(19) Europäisches Patentamt
European Patent Office
Office européen des brevets

(11) EP 3 299 411 A1

(12) EUROPEAN PATENT APPLICATION
published in accordance with Art. 153(4) EPC

(43) Date of publication:
**28.03.2018 Bulletin 2018/13**

(21) Application number: **16807262.7**

(22) Date of filing: **18.05.2016**

(51) Int Cl.:
***C08L 9/06*** *(2006.01)* ***B60C 1/00*** *(2006.01)*
***C08J 3/22*** *(2006.01)* ***C08K 3/04*** *(2006.01)*
***C08K 3/36*** *(2006.01)* ***C08L 1/02*** *(2006.01)*

(86) International application number:
**PCT/JP2016/064760**

(87) International publication number:
**WO 2016/199555 (15.12.2016 Gazette 2016/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.06.2015 JP 2015115817**
**08.06.2015 JP 2015115818**

(71) Applicant: **Sumitomo Rubber Industries, Ltd.**
**Kobe-shi, Hyogo 651-0072 (JP)**

(72) Inventor: **MIYAZAKI, Tatsuya**
**Kobe-shi**
**Hyogo 651-0072 (JP)**

(74) Representative: **Manitz Finsterwald Patentanwälte PartmbB**
**Martin-Greif-Strasse 1**
**80336 München (DE)**

# (54) PNEUMATIC TIRE AND MOTORCYCLE TIRE

(57) The invention aims to provide a pneumatic tire achieving a balanced improvement in dry grip performance and abrasion resistance. The invention relates to a pneumatic tire including a component that contacts a road during running, the component being formed from a rubber composition for a component that contacts a road during running which contains: SBR; a short cellulose fiber having an average fiber length of 10 $\mu m$ to 10 mm; and a silica having a $N_2SA$ of 100 $m^2/g$ or more and/or a carbon black having a $N_2SA$ of 70 $m^2/g$ or more, the SBR being present in an amount of 60% by mass or more per 100% by mass of the rubber component, the rubber composition containing, per 100 parts by mass of the rubber component, 0.1-20 parts by mass of the fiber and at least 60 parts by mass in total of the silica and/or the carbon black.

EP 3 299 411 A1

**Description**

TECHNICAL FIELD

The present invention relates to a pneumatic tire and a tire for motorcycles.

BACKGROUND ART

Various techniques have recently been developed to improve the miscibility of celluloses derived from wood with rubber, such as by fibrillation, conversion into a masterbatch or a high purity natural rubber masterbatch, modification of hydroxyl groups, mixing of multiple types, or coating with a dispersing agent or resin. The proposed applications include, for example, tire components such as treads, base treads, sidewalls, and bead apexes which contain micro-dispersed cellulose fibers to take advantage of its reinforcing effect and anisotropic physical properties.

In cases where cellulose fibers are incorporated into treads, particularly of studless winter tires, for example, the inherent water absorbing properties of the hydroxyl groups in the fiber structure may be used to remove water formed between the icy road surface and the tread surface, or the fiber surface may be made lipophilic by coating with a resin or an organic dispersing agent to provide water drainage properties, thereby removing water on ice. Moreover, the reinforcing properties have attracted attention and some techniques have been proposed. For example, the cellulose fibers may be used in components other than treads to enhance the stress response to small strains, thereby improving handling stability, or microfibers may be incorporated into latex of natural rubber or highly purified natural rubber to form a masterbatch so that the fibers are made lipophilic, thereby enhancing dispersibility in rubber.

However, even in the treads of studless winter tires containing lipophilically-treated short fibers, some problems are caused by softening of the rubber due to the absorption of water, such as a reduction in the rigidity of patterns, a decrease in the actual road contact area during rolling, and a deterioration in grip. If non-lipophilic fiber powder is kneaded with rubber, fiber aggregates with a length of several millimeters are exposed, causing deterioration in rubber properties such as breaking properties and abrasion resistance.

Dry grip performance is very important for tires for racing (racing tires) and high performance tires. For this purpose, various techniques have been developed, including high-grip resin, styrene-butadiene rubber with a high styrene content, and liquid styrene-butadiene copolymers, but unfortunately they are unsatisfactory. Moreover, after dry running with extreme cornering, the abraded tire surface has abrasions which seem to be the result of skidding in the direction of substantially 90° relative to the running direction, indicating skidding of the tires upon cornering. Therefore, sufficient abrasion resistance for such a running mode is needed. Furthermore, since dry grip performance is in a trade-off relationship with handling stability and abrasion resistance, it is usually difficult to achieve a balanced improvement in these properties.

Tires for two-wheeled vehicles, particularly for racing, are not required to resist side force. Thus, cross breakers are less likely to be used in such tires; instead, usually jointless bands are wound along the circumferential direction. This is because in motorcycles and motorbikes, cornering force is generated by the driver's weight shift to move the center of gravity of the vehicle towards the inside and due to the round tread shape of the tires.

Hence, it is important for such tires to have explosive traction to return to straight running after cornering, i.e. to accelerate after slowing down, namely circumferential traction. Conventional formulations for treads of two-wheeled vehicles, like those for four-wheeled vehicles aim to achieve two goals, i.e. increased hysteresis loss and increased adhesion. To this end, techniques have been proposed including the use of higher molecular weight polymers and the formation of extended carbon structures.

In order to improve circumferential traction, it is effective to increase circumferential E* by about 20% without increasing E* in the Z axis direction (= the vertical indentation direction in the measurement of Hs), wherein the circumferential direction (rolling direction) corresponds to the X axis and the radial direction corresponds to the Y axis. Although the use of higher molecular weight polymers or oil-extended polymers is effective, the upper limit of the weight average molecular weight Mw is about 1,500,000 because the dispersibility of the polymers, fillers, or resins and the uniformity of crosslinking can deteriorate.

Higher carbon structures lead to a deterioration in dispersibility of carbon black and abrasion resistance. Moreover, when great use of high molecular weight polymers is made and the crosslink density is controlled, the advantage is cancelled out due to the deterioration in the dispersibility of polymers and fillers as described above, with the result that grip performance is not improved. Thus, there is a limitation in improving grip performance by the use of polymers.

Patent Literature 1 discloses a rubber composition prepared from a masterbatch prepared by mixing predetermined amounts of rubber latex, a microfibrillated plant fiber, and a cationic polymer. However, there is still room for improvement to improve dry grip performance, particularly during running under high side force conditions, and abrasion resistance, or to improve particularly traction in the tire circumferential direction, and abrasion resistance.

CITATION LIST

PATENT LITERATURE

Patent Literature 1: JP 2014-47328 A

SUMMARY OF INVENTION

A first aspect of the present invention aims to solve the above problems and provide a pneumatic tire achieving a balanced improvement in dry grip performance, particularly during running under high side force conditions, and abrasion resistance.

A second aspect of the present invention aims to solve the above problems and provide a tire for motorcycles achieving a balanced improvement in dry grip performance, particularly traction in the tire circumferential direction, and abrasion resistance.

SOLUTION TO PROBLEM

The first aspect of the present invention relates to a pneumatic tire, including a component that contacts a road during running, the component being formed from a rubber composition for a component that contacts a road during running, the rubber composition containing: styrene-butadiene rubber; a short cellulose fiber having an average fiber length of 10 μm to 10 mm; and at least one of a silica having a nitrogen adsorption specific surface area of 100 $m^2/g$ or more or a carbon black having a nitrogen adsorption specific surface area of 70 $m^2/g$ or more, the styrene-butadiene rubber being present in an amount of 60% by mass or more based on 100% by mass of a rubber component in the rubber composition, the rubber composition containing, per 100 parts by mass of the rubber component, 0.1 to 20 parts by mass of the short cellulose fiber and at least 60 parts by mass in total of the at least one of the silica or the carbon black.

The carbon black in the first aspect of the present invention preferably has a nitrogen adsorption specific surface area of 150 $m^2/g$ or more.

The styrene-butadiene rubber in the first aspect of the present invention preferably has a weight average molecular weight of 1,000,000 or more.

The rubber composition for a component that contacts a road during running in the first aspect of the present invention is preferably prepared from a masterbatch containing the short cellulose fiber and the styrene-butadiene rubber.

The masterbatch in the first aspect of the present invention preferably contains carbon black.

The pneumatic tire of the first aspect of the present invention preferably includes the component that contacts a road during running which forms at least one tread layer of a mono- or multi-layered tread.

In the pneumatic tire of the first aspect of the present invention, the component that contacts a road during running preferably has a road-contacting area including a region in which the short cellulose fiber is oriented at 30° to 90° with respect to a circumferential direction.

An orientation of the short cellulose fiber in the component that contacts a road during running and an orientation of the short cellulose fiber in an adjacent inner compound preferably cross at an angle in the range of 10° to 90°.

The second aspect of the present invention relates to a tire for motorcycles, including a component that contacts a road during running, the component being formed from a rubber composition for a component that contacts a road during running, the rubber composition containing: styrene-butadiene rubber; and a short cellulose fiber having an average fiber length of 10 μm to 10 mm, the styrene-butadiene rubber being present in an amount of 60% by mass or more based on 100% by mass of a rubber component in the rubber composition, the rubber composition containing 0.1 to 20 parts by mass of the short cellulose fiber per 100 parts by mass of the rubber component.

The rubber composition for a component that contacts a road during running in the second aspect of the present invention preferably contains a carbon black having a nitrogen adsorption specific surface area of 150 $m^2/g$ or more.

The styrene-butadiene rubber in the second aspect of the present invention preferably has a weight average molecular weight of 1,000,000 or more.

The rubber composition for a component that contacts a road during running in the second aspect of the present invention is preferably prepared from a masterbatch containing the short cellulose fiber and the styrene-butadiene rubber.

The masterbatch in the second aspect of the present invention preferably contains carbon black.

The tire for motorcycles of the second aspect of the present invention preferably includes the component that contacts a road during running which forms at least one tread layer of a mono- or multi-layered tread.

In the tire for motorcycles of the second aspect of the present invention, the component that contacts a road during running preferably has a contact zone in which the short cellulose fiber is aligned at 0° to 45° to a circumferential direction.

More preferably, the component that contacts a road during running has a contact zone in which the short

cellulose fiber is aligned at 0° to 30° to a circumferential direction.

## ADVANTAGEOUS EFFECTS OF INVENTION

The pneumatic tire of the first aspect of the present invention includes a component that contacts a road during running, the component being formed from a rubber composition for a component that contacts a road during running, the rubber composition containing: styrene-butadiene rubber; a short cellulose fiber having an average fiber length of 10 $\mu$m to 10 mm; and a silica having a nitrogen adsorption specific surface area of 100 $m^2$/g or more and/or a carbon black having a nitrogen adsorption specific surface area of 70 $m^2$/g or more, the styrene-butadiene rubber being present in an amount of 60% by mass or more based on 100% by mass of the rubber component, the rubber composition containing, per 100 parts by mass of the rubber component, 0.1 to 20 parts by mass of the short cellulose fiber and at least 60 parts by mass in total of the silica and/or the carbon black. Such a pneumatic tire achieves a balanced improvement in dry grip performance, particularly during running under high side force conditions, and abrasion resistance.

The tire for motorcycles of the second aspect of the present invention includes a component that contacts a road during running, the component being formed from a rubber composition for a component that contacts a road during running, the rubber composition containing: styrene-butadiene rubber; and a short cellulose fiber having an average fiber length of 10 $\mu$m to 10 mm, the styrene-butadiene rubber being present in an amount of 60% by mass or more based on 100% by mass of the rubber component, the rubber composition containing 0.1 to 20 parts by mass of the short cellulose fiber per 100 parts by mass of the rubber component. Such a tire for motorcycles achieves a balanced improvement in dry grip performance, particularly traction in the tire circumferential direction, and abrasion resistance.

## DESCRIPTION OF EMBODIMENTS

[The first aspect of the present invention (pneumatic tire)]

The pneumatic tire of the first aspect of the present invention includes a component that contacts a road during running. The component is formed from a rubber composition for a component that contacts a road during running which contains predetermined amounts of styrene-butadiene rubber, and a short cellulose fiber having a predetermined average fiber length, and a silica having a predetermined nitrogen adsorption specific surface area and/or a carbon black having a predetermined nitrogen adsorption specific surface area. Due to the presence of the component that contacts a road during running containing these components, dry grip performance, particularly during running under severe side force conditions (side grip force), can be improved while maintaining or improving good abrasion resistance, thereby achieving a balanced improvement in these properties. Further, grip force during straight running and road surface following properties (contact feel) can be maintained.

The reason why these improvement effects are obtained is not clear, but is presumed as follows.

Celluloses derived from natural wood are centimeter-scale long fibers formed from bundles of nano-scale fine fluff. The fiber bundles are compressed in the perpendicular direction during running, so that fine fluff appears in some parts. This fluff fills micro-scale irregularities on the road surface to allow the rubber to make a close contact with the road, thereby providing physical suction force. Thus, great dry grip performance can be exhibited even during running under severe side force conditions. In other words, dry grip performance is improved due to the same action as the mechanism of capture of irregularities on walls by fine hairs of gecko's legs. In order to make such an action, a running mode causing fluff generation is necessary as an environmental factor. Desirable is a mode in which abrasion marks with a pitch of abrasion thread of 1 mm or more are formed. Thus, if the component that contacts a road during running, which is expected to be worn, is worn at a rate satisfying this mode, the fibers can be utilized in a tensile mode, and further the above-described fluff can easily appear on the surface of the component that contacts a road during running.

Accordingly, since if tension is applied, the short cellulose fiber bears the tensile force to provide resistance, and also since the short fiber having an average fiber length of 10 $\mu$m to 10 mm is present in an amount of 0.1 to 20 parts by mass, road surface following properties do not greatly deteriorate, and micro-adhesion between the road and the component that contacts a road during running is improved. Consequently, dry grip performance can be improved while maintaining or improving good abrasion resistance.

Any styrene-butadiene rubber (SBR) may be used in the rubber composition for a component that contacts a road during running, and examples include emulsion-polymerized SBR (E-SBR) and solution-polymerized SBR (S-SBR), which may or may not be oil extended. In view of grip performance, oil-extended high molecular weight SBR is preferred among these. Modified SBR such as chain end-modified S-SBR or main chain-modified S-SBR, which shows enhanced interaction with fillers, may also be suitably used. These types of SBR may be used alone or two or more of these may be used in combination.

The modified SBR is also preferably a copolymer of styrene and butadiene which contains a primary amino group or an alkoxysilyl group. The primary amino group may be bonded to any of the polymerization initiating terminal,

the polymerization terminating terminal, the main chain of the polymer, and the side chain. However, it is preferably introduced to the polymerization initiating terminal or the polymerization terminating terminal because the disappearance of energy is inhibited from the polymer terminal to be able to improve hysteresis loss characteristics.

The modified SBR may suitably be one produced particularly by modifying the polymerization terminal (active end) of solution-polymerized styrene-butadiene rubber (S-SBR) with a compound represented by the formula below (modified S-SBR (modified SBR disclosed in JP 2010-111753 A)). In this case, the bond between the silica and the polymer chain can be reinforced to further improve dry grip performance and other properties.

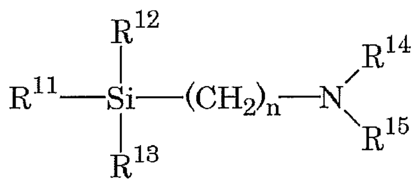

In the formula, $R^{11}$, $R^{12}$, and $R^{13}$ are the same or different and each represent an alkyl group, an alkoxy group (preferably a C1-C8, more preferably C1-C6, still more preferably C1-C4 alkoxy group), a silyloxy group, an acetal group, a carboxyl group (-COOH), a mercapto group (-SH), or a derivative thereof; $R^{14}$ and $R^{15}$ are the same or different and each represent a hydrogen atom or an alkyl group (preferably a C1-C4 alkyl group); and n represents an integer (preferably an integer of 1 to 5, more preferably 2 to 4, still more preferably 3).

Each of $R^{11}$, $R^{12}$, and $R^{13}$ is desirably an alkoxy group, and each of $R^{14}$ and $R^{15}$ is desirably an alkyl group. In such cases, excellent dry grip performance and excellent abrasion resistance can be obtained.

Specific examples of the compound of the formula include 3-aminopropyltrimethoxysilane, 3-aminopropyldimethylmethoxysilane, 3-aminopropylmethyldimethoxysilane, 2-dimethylaminoethyltrimethoxysilane, 3-diethylaminopropyltrimethoxysilane, and 3-(N,N-dimethylamino)propyltrimethoxysilane. These compounds may be used alone or two or more of these may be used in combination.

The modification of styrene-butadiene rubber with the compound (modifier) of the formula may be carried out by conventional methods, such as those disclosed in JP H06-53768 B, JP H06-57767 B, and JP 2003-514078 T. For example, the modification may be accomplished by bringing styrene-butadiene rubber into contact with the modifier, e.g. as follows: After the synthesis of styrene-butadiene rubber by anionic polymerization, a predetermined amount of the modifier is added to the polymer rubber solution to react the polymerization terminal (active end) of the styrene-butadiene rubber with the modifier. Alternatively, the modifier is added to a solution of styrene-butadiene rubber to react them.

The SBR preferably has a styrene content of 15% by mass or more, more preferably 18% by mass or more, still more preferably 20% by mass or more, particularly preferably 30% by mass or more. The styrene content is also preferably 60% by mass or less, more preferably 55% by mass or less, still more preferably 50% by mass or less, particularly preferably 45% by mass or less. If the styrene content is less than 15% by mass, insufficient dry grip performance may be obtained. If the styrene content is more than 60% by mass, the styrene groups are more likely to be located adjacent to each other or localized, and temperature dependence of viscoelasticity tends to increase so that larger changes in properties are obtained relative to changes in temperature, with the result that good wet grip performance or dry grip performance tends not to be obtained.

The styrene content as used herein is determined by $^1H$-NMR analysis.

The SBR preferably has a vinyl content of 10% by mass or more, more preferably 15% by mass or more, still more preferably 20% by mass or more, particularly preferably 25% by mass or more. If the vinyl content is less than 10% by mass, sufficient dry grip performance may not be obtained. The vinyl content is preferably 90% by mass or less, more preferably 80% by mass or less, still more preferably 70% by mass or less, particularly preferably 60% by mass or less. If the vinyl content is more than 90% by mass, rubber strength may decrease, and thus properties may become unstable.

The vinyl content (1,2-butadiene unit content) as used herein can be determined by infrared absorption spectrometry.

The SBR preferably has a glass transition temperature (Tg) of -45°C or higher, more preferably -40°C or higher. The Tg is preferably 10°C or lower, more preferably 5°C or lower, still more preferably 0°C or lower.

The glass transition temperature as used herein is determined by differential scanning calorimetry (DSC) at a rate of temperature rise of 10°C/min in accordance with JIS K 7121.

The SBR preferably has a weight average molecular weight (Mw) of 200, 000 or more, more preferably 250, 000 or more, still more preferably 300,000 or more. For use in racing tires or high performance tires, it is particularly preferably an oil-extended polymer having a Mw of 1, 000, 000 or more. The Mw is also preferably 2, 000, 000 or less, more preferably 1, 800, 000 or less. The use of SBR having a Mw of 200, 000 or more can result in high dry grip

performance and high abrasion resistance. The use of SBR having a Mw of more than 2, 000, 000 may result in poor filler dispersion, thereby deteriorating abrasion resistance. The weight average molecular weight as used herein can be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The amount of SBR based on 100% by mass of the rubber component is 60% by mass or more, preferably 70% by mass or more, more preferably 80% by mass or more, and may be 100% by mass. The presence of less than 60% by mass of SBR tends to result in insufficient dry grip performance.

Examples of rubbers other than SBR that can be included in the rubber component include isoprene-based rubbers such as natural rubber (NR), highly purified NR (UPNR), deproteinized NR (DPNR), epoxidized NR (ENR), and polyisoprene rubber (IR), styrene-butadiene rubber (SBR), polybutadiene rubber (BR), styrene-isoprene-butadiene rubber (SIBR), chloroprene rubber (CR), and acrylonitrile butadiene rubber (NBR). NR or BR is preferred among these. The BR may suitably be one synthesized using a rare earth catalyst, and examples include BR synthesized using, as the rare earth catalyst, lanthanide rare earth compounds such as neodymium (Nd)-containing compounds.

Examples of the short cellulose fiber include those derived from naturally-occurring materials, such as wood, bamboo, hemp, jute, kenaf, crop waste, cloth, recycled pulp, waste paper, bacterial cellulose, and ascidian cellulose. The short cellulose fiber may be produced by any method, such as for example by chemically treating a naturally-occurring material as described above with sodium hydroxide or other chemicals, and mechanically grinding or beating the treated material using a refiner, a twin screw kneader (twin screw extruder), a twin screw kneading extruder, a high-pressure homogenizer, a media-agitating mill, a stone mill, a grinder, a vibration mill, a sand grinder, or other machines.

The short cellulose fiber has an average fiber length of 10 μm or more, preferably 100 μm or more, more preferably 500 μm or more, still more preferably 1 mm or more. The average fiber length is 10 mm or less, preferably 5 mm or less, more preferably 3 mm or less, still more preferably 2 mm or less. When the average fiber length is within the above range, good anisotropy is provided so that dry grip performance can be improved while obtaining good abrasion resistance. If the average fiber length is less than 10 μm, thread cutting tends to occur during the production or rubber kneading. A short cellulose fiber having an average fiber length of less than 80 μm is smaller than the ultramicro pitch on the road surface. Moreover, such a fiber may allow the rubber compound to have excessively high E*, resulting in deteriorated road surface following properties. A short cellulose fiber having an average fiber length of more than 10 mm may cause a rubber flow failure during vulcanization, appear as a contaminant on the surface, or cause rubber chipping. A short cellulose fiber having an average fiber length of more than 8 mm may cause sliding of the rubber like skis.

The short cellulose fiber preferably has an average fiber diameter of 1 to 1,000 μm, more preferably 2 to 500 μm, still more preferably 3 to 100 μm, particularly preferably 4 to 40 μm. When the average fiber diameter is within the above range, a balanced improvement in dry grip performance and abrasion resistance can be achieved.

The average fiber length (number average fiber length) and average fiber diameter (number average fiber diameter) of the short cellulose fiber can be determined by known methods. For example, the number average fiber diameter and number average fiber length may be determined by observing the short cellulose fiber fixed on a mica slice with a scanning probe microscope (available from Hitachi High-Tech Science Corporation) (3,000 nm $\times$ 3,000 nm) and measuring the widths of 50 fibers. The number average fiber length may be determined from the observed image using an image analysis software WinROOF (available from Mitani Corporation).

The amount of the short cellulose fiber per 100 parts by mass of the rubber component is 0.1 to 20 parts by mass. In this case, a moderate E* anisotropy and good motion performance can be obtained. The lower limit of the amount is preferably 0.3 parts by mass or more, more preferably 1.0 part by mass or more. The addition of less than 0.1 parts by mass of the short cellulose fiber may not produce the effect of the short cellulose fiber. The upper limit of the amount is preferably 10 parts by mass or less, more preferably 5 parts by mass or less. With more than 20 parts by mass of the short cellulose fiber, the fibers may interact with each other to cause hardening in three directions, thereby adversely resulting in a reduction in anisotropy.

The rubber composition for a component that contacts a road during running contains a silica and/or carbon black each having a predetermined nitrogen adsorption specific surface area. In this case, excellent dry grip performance and excellent abrasion resistance can be obtained.

The nitrogen adsorption specific surface area ($N_2SA$) of the silica is 100 $m^2/g$ or more, preferably 150 $m^2/g$ or more, more preferably 170 $m^2/g$ or more. If the $N_2SA$ is less than 100 $m^2/g$, sufficient dry grip performance or abrasion resistance may not be obtained. The $N_2SA$ is preferably 300 $m^2/g$ or less, more preferably 250 $m^2/g$ or less. If the $N_2SA$ is more than 300 $m^2/g$, fuel economy tends to deteriorate.

The $N_2SA$ of silica is determined by BET method in accordance with ASTM D3037-93.

The nitrogen adsorption specific surface area ($N_2SA$) of the carbon black is 70 $m^2/g$ or more, preferably 120 $m^2/g$ or more, more preferably 150 $m^2/g$ or more. If the $N_2SA$ is less than 70 $m^2/g$, sufficient dry grip performance or abrasion resistance may not be obtained. The $N_2SA$ is preferably 300 $m^2/g$ or less, more preferably 250 $m^2/g$ or less. If the $N_2SA$ is more than 300 $m^2/g$, fuel economy tends to deteriorate.

The $N_2SA$ of carbon black is determined in accordance with JIS K 6217-2:2001.

The combined amount of the silica and the carbon black per 100 parts by mass of the rubber component is 60 parts by mass or more, preferably 80 parts by mass or more, more preferably 100 parts by mass or more, still more preferably 110 parts by mass or more. With the combined amount of less than 60 parts by mass, sufficient dry grip performance or abrasion resistance may not be obtained. The combined amount is also preferably 200 parts by mass or less, more preferably 170 parts by mass or less, still more preferably 140 parts by mass or less. With the combined amount of more than 200 parts by mass, fuel economy or ride quality may deteriorate.

When either the silica or carbon black is incorporated, the amount of the silica or carbon black may also suitably be adjusted to the combined amount indicated above.

The rubber composition for a component that contacts a road during running preferably contains an alkylphenol resin. This can improve dry grip performance while ensuring good abrasion resistance.

Non-limiting examples of the alkylphenol resin include alkylphenol-aldehyde condensation resins obtained by reacting alkylphenols with aldehydes such as formaldehyde, acetaldehyde, or furfural in the presence of acid or alkali catalysts; alkylphenol-alkyne condensation resins obtained by reacting alkylphenols with alkynes such as acetylene; and modified alkylphenol resins obtained by modifying the foregoing resins with compounds such as cashew oil, tall oil, linseed oil, various animal or vegetable oils, unsaturated fatty acids, rosin, alkylbenzene resins, aniline, or melamine. In view of the effects of the present invention, alkylphenol-alkyne condensation resins are preferred among these, with alkylphenol-acetylene condensation resins being particularly preferred.

Examples of the alkylphenol of the alkylphenol resin include cresol, xylenol, t-butylphenol, octylphenol, and nonylphenol. Preferred among these are phenols containing branched alkyl groups, such as t-butylphenol, with t-butylphenol being particularly preferred.

The alkylphenol resin preferably has a Tg of 60 °C or higher, more preferably 65°C or higher, still more preferably 80°C or higher. The Tg is preferably 110°C or lower, more preferably 105°C or lower, still more preferably 100°C or lower. When the Tg is within the above range, good abrasion resistance can be obtained while achieving the effect of improving dry grip performance.

The alkylphenol resin preferably has a softening point of 80°C or higher, more preferably 100°C or higher, still more preferably 120°C or higher, but preferably 180°C or lower, more preferably 160 °C or lower, still more preferably 150 °C or lower. When the softening point is within the above range, good abrasion resistance can be obtained while achieving the effect of improving dry grip performance.

Herein, the softening point is determined in accordance with JIS K 6220-1:2001 using a ring and ball softening point measuring apparatus and is defined as the temperature at which the ball drops down.

The amount of the alkylphenol resin per 100 parts by mass of the rubber component is preferably 1 part by mass or more, more preferably 10 parts by mass or more, still more preferably 15 parts by mass or more, but is preferably 100 parts by mass or less, more preferably 70 parts by mass or less, still more preferably 60 parts by mass or less. The use of less than 1 part by mass of the alkylphenol resin may provide an insufficient adhesion effect so that dry grip performance cannot be improved. The use of more than 100 parts by mass of the alkylphenol resin may deteriorate abrasion resistance.

The rubber composition for a component that contacts a road during running preferably contains a terpene aromatic resin or a hydrogenated terpene aromatic resin. This can improve dry grip performance while ensuring good abrasion resistance. In particular, the resin may suitably be a hydrogenated terpene aromatic resin produced by hydrogenation of double bonds in a terpene aromatic resin, whose degree of hydrogenation of double bonds is 20% to 100% and whose hydroxyl value is 20 mg KOH/g or less.

The term "terpene aromatic resin" used in the hydrogenated terpene aromatic resin refers to a compound produced by copolymerizing an aromatic compound with a terpene compound by a usual method. Specifically, for example, it may be produced by dropwise adding raw materials in any order into an organic solvent such as toluene in the presence of a catalyst such as $BF_3$ and reacting the mixture at a predetermined temperature for a predetermined time.

The ratio of the aromatic compound and the terpene compound copolymerized may be appropriately selected so that the resulting hydrogenated terpene aromatic resin has the physical properties described later. The terpene aromatic resin may contain copolymerization units other than the aromatic compound and terpene compound, such as indene, as long as the resulting hydrogenated terpene aromatic resin has the physical properties described later.

The aromatic compound may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene derivatives such as styrene, alkylstyrenes, alkoxystyrenes, and unsaturated hydrocarbon group-containing styrenes. Among these, styrene derivatives are preferred. The alkyl or alkoxy groups in the foregoing compounds each preferably have 1 to 20 carbon atoms, more preferably 1 to 12 carbon atoms. The unsaturated hydrocarbon groups in the foregoing compounds each preferably have 2 to 20 carbon atoms, more preferably 2 to 12 carbon atoms.

The aromatic compound may have one substituent or two or more substituents on the aromatic ring. In the

case of the aromatic compound having two or more substituents on the aromatic ring, the substituents may be located in any of the ortho, meta, or para positions. Moreover, in the case of a styrene derivative having a substituent on the aromatic ring, the substituent may be at the ortho, meta, or para position with respect to the vinyl group of styrene.

These aromatic compounds may be used alone or two or more of these may be used in combination.

Specific examples of the alkylphenols include methylphenol, ethylphenol, butylphenol, t-butylphenol, octylphenol, nonylphenol, decylphenol, and dinonylphenol. They may have the respective substituents at any of the ortho, meta, or para positions. Among these, t-butylphenol is preferred, with p-t-butylphenol being more preferred.

Specific examples of the alkylnaphthols include compounds obtained by replacing the phenol moiety of the alkylphenols with naphthol.

Specific examples of the alkylstyrenes include compounds obtained by replacing the phenol moiety of the alkylphenols with styrene.

Specific examples of the alkoxyphenols include compounds obtained by replacing the alkyl groups of the alkylphenols with the corresponding alkoxy groups. Specific examples of the alkoxynaphthols include compounds obtained similarly by replacing the alkyl groups of the alkylnaphthols with the corresponding alkoxy groups. Specific examples of the alkoxystyrenes include compounds obtained by replacing the alkyl groups of the alkylstyrenes with the corresponding alkoxy groups.

Examples of the unsaturated hydrocarbon group-containing phenols include compounds which contain at least one hydroxyphenyl group per molecule, and further in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C20 alkenyl groups.

Specific examples of the unsaturated hydrocarbon group-containing phenols include isopropenylphenol and butenylphenol. Specific examples of the unsaturated hydrocarbon group-containing naphthols and the unsaturated hydrocarbon group-containing styrenes are similarly described.

The terpene compound refers to a hydrocarbon represented by the compositional formula $(C_5H_8)_n$ or an oxygen-containing derivative thereof, each of which has a terpene basic skeleton and is classified into monoterpenes ($C_{10}H_{16}$), sesquiterpenes ($C_{15}H_{24}$), diterpenes ($C_{20}H_{32}$), and other terpenes. The terpene compound is not particularly limited, but is preferably a cyclic unsaturated hydrocarbon. The terpene compound is also preferably free of a hydroxyl group.

Specific examples of the terpene compound include α-pinene, β-pinene, 3-carene (δ-3-carene), dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Preferred among these are α-pinene, β-pinene, 3-carene (δ-3-carene), dipentene, and limonene, with α-pinene or limonene being more preferred, because they allow for a balanced improvement in grip performance and abrasion resistance. The term "limonene" may include any of d-, 1-, and dl-limonenes.

These terpene compounds may be used alone, or two or more of these may be used in combination.

Examples of the terpene aromatic resins produced, for example, by copolymerizing styrene derivatives with dipentene and/or pinene include compounds represented by the following formula (I):

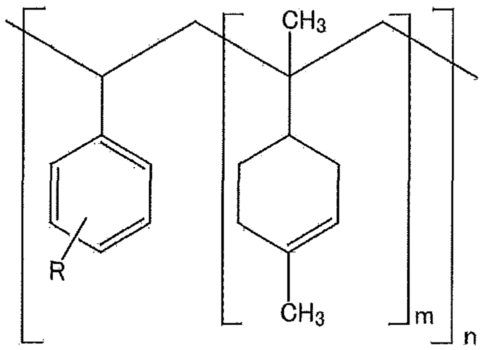

(I)

wherein R, which is a substituent on the aromatic ring, represents a C1-C20 alkyl group, a C1-C20 alkoxy group, or a C2-C20 unsaturated hydrocarbon group, provided that the number of substituents R may be 1 to 5, and when the number of substituents is two or more, the substituents may be the same as or different from each other and may also be located in any position; m is 0.2 to 20; and n is 2 to 10.

Specific examples of the terpene aromatic resin include YS resin TO125, YS resin TO115, YS resin TO105, YS resin TO85, and YS polyster UH115, all available from Yasuhara Chemical Co. , Ltd.

The hydrogenated terpene aromatic resin in the present invention may be produced by hydrogenating the double bonds of the above-described terpene aromatic resin by a usual method. The hydrogenation may be carried out

by, for example, catalytic hydrogen reduction using, as a catalyst, a noble metal such as palladium, ruthenium, rhodium, or nickel, either alone or supported on a carrier such as activated carbon, activated alumina, or diatomaceous earth.

The amount of the catalyst per 100% by mass of the starting terpene aromatic resin is preferably 0.1% to 50% by mass, more preferably 0.2% to 40% by mass. If the amount of the catalyst is less than 0.1% by mass, the hydrogenation reaction tends to slow down. If the amount is more than 50% by mass, the catalyst may be left as an impurity which can act as an obstacle to filler dispersion or polymer dispersion, resulting in insufficient dry grip performance. The hydrogen pressure during the hydrogenation reaction is typically 5 to 200 $kg/cm^2$, preferably 50 to 100 $kg/cm^2$. If the hydrogen pressure is less than 5 $kg/cm^2$, the rate of the hydrogenation reaction tends to slow down, while if the hydrogen pressure is more than 200 $kg/cm^2$, the reaction equipment may be damaged or become difficult to maintain, resulting in poor productivity. Moreover, the temperature during the hydrogenation reaction is typically 10°C to 200°C, preferably 20°C to 150°C. If the reaction temperature is lower than 10°C, the hydrogenation reaction tends to slow down, while if the reaction temperature is higher than 200°C, the reaction equipment may be damaged or become difficult to maintain, resulting in poor productivity.

The hydrogenated terpene aromatic resin may be a commercial product, such as YS polyster M80, YS polyster M105, YS polyster M115, or YS polyster M125, all available from Yasuhara Chemical Co., Ltd.

The hydrogenated terpene aromatic resin in the present invention prepared as above contains hydrogenated double bonds.

The hydrogenated terpene aromatic resin has a degree of hydrogenation of double bonds of 20% to 100%. In particular, the degree of hydrogenation of double bonds is preferably 50% or more, more preferably 70% or more. If the degree of hydrogenation is less than 20%, grip performance, particularly dry grip performance, or abrasion resistance tends to be insufficient.

The degree of hydrogenation (hydrogenation ratio) is calculated from the integrals of the double bond peaks determined by $^1H$-NMR (proton NMR) according to the equation below. The degree of hydrogenation (hydrogenation ratio) herein refers to the percentage of hydrogenated double bonds.

$$(\text{Hydrogenation ratio } (\%)) = ((A - B)/A) \times 100$$

where A: the integral of the double bond peaks before hydrogenation;
B: the integral of the double bond peaks after hydrogenation.

For example, in cases where the terpene aromatic resin is a compound of formula (I) produced by copolymerizing a styrene derivative and limonene, if the degree of hydrogenation is set to 100%, then a hydrogenated terpene aromatic resin represented by the formula (II) below will be obtained. If the degree of hydrogenation is at least 20% but less than 100%, for example, a mixture of a resin represented by the formula (II)-1 below (with a remaining styrene group) and a resin of formula (II) will be obtained. A hydrogenated terpene aromatic resin represented by the formula (III) below will also be obtained.

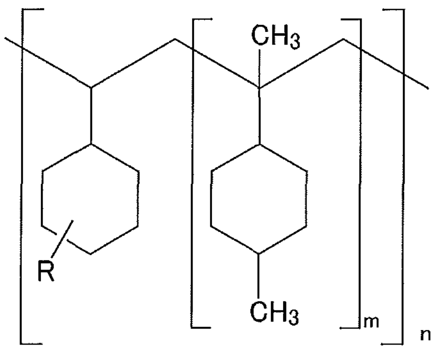

(II)

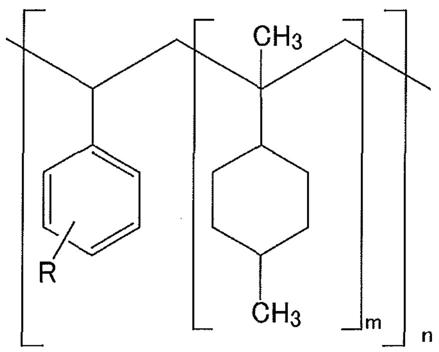

(II)-1

In formulas (II) and (II)-1, R, which is a substituent on the cyclohexane ring, represents a C1-C20 alkyl group, a C1-C20 alkoxy group, or a C2-C20 unsaturated hydrocarbon group, provided that the number of substituents R may be 1 to 5, and when the number of substituents is two or more, the substituents may be the same as or different from each other and may also be located in any position; m is 0.2 to 20; and n is 2 to 10.

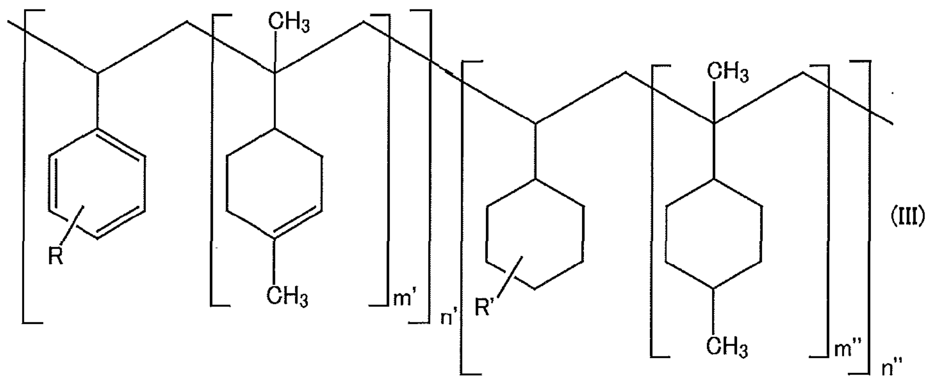

(III)

In formula (III), R, which is a substituent on the aromatic ring, represents a C1-C20 alkyl group, a C1-C20 alkoxy group, or a C2-C20 unsaturated hydrocarbon group, and R', which is a substituent on the cyclohexane ring, represents a C1-C20 alkyl group, a C1-C20 alkoxy group, or a C2-C20 unsaturated hydrocarbon group, provided that the number of substituents R or R' may be 1 to 5, and when the number of substituents is two or more, the substituents may be the same as or different from each other and may also be located in any position; m'+m" is 0.2 to 20; and n'+n" is 2 to 10. The repeating units may be linked in any order and may be arranged in blocks, alternately, or randomly.

Preferred embodiments of the hydrogenated terpene aromatic resin may also be described as, for example, resins containing repeating units of formula (II) containing a cyclohexyl group, provided that the resins may contain in the structure at least one repeating unit selected from the group consisting of repeating units of formula (I) and repeating units represented by the formula (IV) below. The repeating units may be linked in any order and may be arranged in blocks, alternately, or randomly.

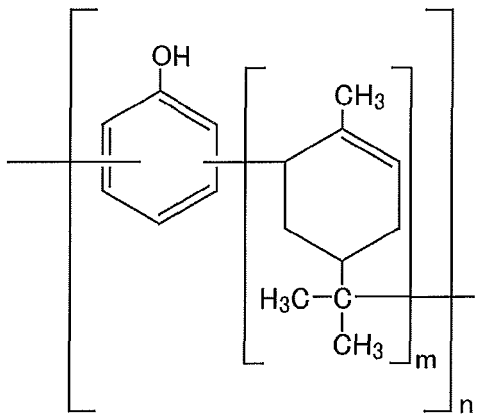

(IV)

In formula (IV), m and n represent the numbers of repeating units, where m is preferably 0.2 to 20, and n is preferably 2 to 10.

The hydroxyl value of the hydrogenated terpene aromatic resin (i.e., the phenol group content) is 20 mg KOH/g or less, preferably 10 mg KOH/g or less, more preferably 5 mg KOH/g or less, still more preferably 1 mg KOH/g or less, further preferably 0.1 mg KOH/g or less, particularly preferably 0 mg KOH/g. If the hydroxyl value is more than 20 mg KOH/g, the resin may show increased self-aggregation and thus reduced affinity for rubber or fillers, thereby failing to provide sufficient grip performance.

The hydroxyl value of the hydrogenated terpene aromatic resin refers to the amount of potassium hydroxide in milligrams required to neutralize the acetic acid which combines with hydroxyl groups on acetylation of 1 g of the hydrogenated terpene aromatic resin, and is measured by potentiometric titration (JIS K 0070:1992).

The hydrogenated terpene aromatic resin preferably has a softening point of 80°C or higher, more preferably 90°C or higher, still more preferably 100°C or higher, further preferably 114°C or higher, particularly preferably 116°C or higher, most preferably 120°C or higher, but preferably 180°C or lower, more preferably 170°C or lower, still more preferably 165°C or lower, particularly preferably 160°C or lower, most preferably 135°C or lower. A hydrogenated terpene aromatic resin having a softening point of lower than 80°C tends to disperse well in rubber but to reduce grip performance. A hydrogenated terpene aromatic resin having a softening point of higher than 180°C tends to disperse poorly, thereby failing to provide sufficient grip performance, and also tends not to provide good abrasion resistance.

The hydrogenated terpene aromatic resin preferably has a glass transition temperature (Tg) of 20°C or higher, more preferably 30°C or higher, still more preferably 40°C or higher. The Tg is preferably 100°C or lower, more preferably 90°C or lower, still more preferably 80°C or lower.

The weight average molecular weight (Mw) of the hydrogenated terpene aromatic resin is not particularly limited, but is preferably 300 to 3,000, more preferably 500 to 2,000. If the Mw is less than 300, the G' value (hardness) of the adhesive layer tends to be low, leading to insufficient grip performance. If the Mw is more than 3,000, rubber hardness tends to increase, resulting in insufficient grip performance or abrasion resistance.

The amount of the hydrogenated terpene aromatic resin per 100 parts by mass of the rubber component is preferably 1 part by mass or more, more preferably 5 parts by mass or more, still more preferably 7 parts by mass or more, but is preferably 100 parts by mass or less, more preferably 80 parts by mass or less, still more preferably 60 parts by mass or less. The use of less than 1 part by mass of the hydrogenated terpene aromatic resin may provide an insufficient adhesion effect so that dry grip performance cannot be improved. The use of more than 100 parts by mass of the hydrogenated terpene aromatic resin may not improve grip performance and may also deteriorate abrasion resistance.

The rubber composition for a component that contacts a road during running may appropriately contain, in addition to the above components, compounding agents conventionally used in the rubber industry, such as oils, zinc oxide, stearic acid, various antioxidants, sulfur, and vulcanization accelerators.

The rubber composition for a component that contacts a road during running can be prepared by conventionally known methods. For example, components other than sulfur and vulcanization accelerators are kneaded using a rubber kneading machine such as a Banbury mixer or an open roll mill (base kneading step), and subsequently the kneaded mixture is kneaded with the sulfur and vulcanization accelerators (final kneading step), followed by vulcanization, whereby the rubber composition can be prepared.

In particular, the rubber composition for a component that contacts a road during running is preferably prepared from a masterbatch containing the short cellulose fiber and the rubber component. In this case, dry grip performance, particularly during running under severe side force conditions, can be significantly improved while maintaining or improving good abrasion resistance.

The rubber component in the masterbatch may be as described earlier. In particular, SBR is preferred, with E-SBR being more preferred, because they have an aromatic ring and are compatible well with carbon black. Also, the masterbatch preferably contains carbon black to obtain good effects as described above. Any carbon black may be used, including those described above. A masterbatch containing SBR, carbon black, and the short cellulose fiber is suitable in order to disperse the short fiber in a compound of a component that contacts a road during running which includes SBR as a main component. Such a masterbatch provides a stable degree of fiber dispersion and stable E*.

The masterbatch can be prepared by known methods. For example, it may be prepared by adding the short cellulose fiber and optional components such as a filler, e.g. carbon black, or a softener, e.g. oil, to a polymer dispersion (a dispersion of rubber such as SBR or NR) containing a surfactant and mixing them, followed by dehydration and drying. The preparation of the dispersion, mixing, dehydration, and drying may be carried out by known methods.

The ratio of the rubber component, short cellulose fiber, filler, softener, and other components in the masterbatch is not particularly limited and may be appropriately selected in view of miscibility and other factors. For example, a masterbatch containing SBR, the short cellulose fiber, and carbon black is preferably prepared by mixing 100 to 1, 500 parts by mass of the short cellulose fiber and 10 to 100 parts by mass of carbon black with 100 parts by mass of SBR. In order to ensure high grip performance by the use of SBR having a high styrene content, the amount of the short

cellulose fiber based on 100% by mass of the masterbatch is preferably 50% by mass or more, more preferably 65% by mass or more.

An unvulcanized rubber composition for a component that contacts a road during running can be prepared by a method that includes base kneading step 1 including kneading the masterbatch with components other than sulfur and vulcanization accelerators, and final kneading step 2 including kneading a kneaded mixture obtained in step 1 with the sulfur and vulcanization accelerators. The unvulcanized rubber composition is vulcanized to prepare a vulcanized rubber composition for a component that contacts a road during running.

Moreover, the pneumatic tire according to the first aspect of the present invention can be produced by usual methods . For example, the unvulcanized rubber composition for a component that contacts a road during running may be extruded into the shape of a component that contacts a road during running, formed in a tire building machine, and assembled with other tire components to build an unvulcanized tire. The unvulcanized tire is heated and pressurized in a vulcanizer to produce a tire.

In the pneumatic tire according to the first aspect of the invention, the road-contacting area of the component that contacts a road during running preferably includes a region in which the short cellulose fiber is oriented at 30° to 90° with respect to the circumferential direction. In other words, in a suitable embodiment of the tire, the short cellulose fiber present in the road-contacting portion of the surface of the component that contacts a road during running is at least partially oriented at 30° to 90° with respect to the circumferential direction of the tire (running direction).

In such a tire, dry grip performance during running under severe side force conditions can be significantly improved while maintaining or improving good abrasion resistance because the short cellulose fiber around the center of contact of the tire resists side force, and the fiber bundles are opened by compression to form fluff. It is not necessary for the fiber to form an angle over the entire width of the component that contacts a road during running (the entire width of the tread) . It is also effective to use the fiber-containing compound only at around the crown where the contact pressure is high.

The orientation of the short cellulose fiber in the component that contacts a road during running and the orientation of the short cellulose fiber in an adjacent inner compound preferably cross at an angle in the range of 10° to 90°. If the fiber in an inner layer is oriented at a predetermined angle with respect to the fiber in the component that contacts a road during running as described above, the above-described action can be significantly made, and the same effect can be very efficiently achieved.

The term "component that contacts a road during running" refers to a component which comes into contact with the road surface during running. For single layer treads, it is the component itself. For multilayered treads, it is, for example, an outer surface tread layer that comes into contact with the road surface during the initial phase of running; a second tread layer adjacent to the inner surface of the outer surface tread layer which comes into contact with the road surface during the middle phase of running; or a third tread layer adjacent to the inner surface of the second tread layer which comes into contact with the road surface during the late phase of running. For example, in the case of a two-layer tread consisting of a cap tread layer and a base tread layer in which the cap tread layer and the base tread layer come into contact with the road surface during the initial phase of running and the middle and late phases of running, respectively, the component that contacts a road during running corresponds to the cap tread layer or base tread layer upon contacting the road.

The component that contacts a road during running may desirably be formed as follows: an unvulcanized rubber composition for a component that contacts a road during running (rubber kneadate) is extruded in an extruder into a sheet with a thickness of about 2 mm and a width of about 1 M; the sheet is cut per component that contacts a road during running (tread width) ; and the cut piece is attached to a raw tread (e.g. base tread) serving as a base such that the short cellulose fiber is aligned in the tire radial direction, for example, such that the fiber is oriented at 30° to 90° as described above. The fiber in the radial direction, even in the ground contact area, does not undergo compression deformation during straight running, but bears tension upon torsional deformation during turning, so that side traction is improved due to the tension of the fiber. The base tread or the like used as a base of the tread may be formed of a compound with or without the short cellulose fiber. When it is a compound with the short cellulose fiber, the fiber is aligned in the circumferential direction for reinforcement, so that straight traction and braking properties can also be improved.

The pneumatic tire according to the first aspect of the present invention can be suitably applied to tires for vehicles other than motorcycles, such as racing tires for four-wheeled vehicles or high performance tires.

[The second aspect of the present invention (tire for motorcycles)]

The tire for motorcycles of the second aspect of the present invention includes a component that contacts a road during running. The component is formed from a rubber composition for a component that contacts a road during running which contains predetermined amounts of styrene-butadiene rubber and a short cellulose fiber having a predetermined average fiber length. Due to the presence of the component that contacts a road during running containing

these components, dry grip performance, particularly traction in the tire circumferential direction, can be improved while maintaining or improving good abrasion resistance, thereby achieving a balanced improvement in these properties.

The reason why these improvement effects are obtained is not clear, but is presumed as follows.

Celluloses derived from natural wood are centimeter-scale long fibers formed from bundles of nano-scale fine fluff. The fiber bundles are compressed in the perpendicular direction during running, so that fine fluff appears in some parts. This fluff fills micro-scale irregularities on the road surface to allow the rubber to make a close contact with the road, thereby providing physical suction force. Thus, very high traction in the tire circumferential direction can be exhibited, and straight grip force can be significantly improved. In other words, dry grip performance is improved due to the same action as the mechanism of capture of irregularities on walls by fine hairs of gecko's legs. In order to make such an action, a running mode causing fluff generation is necessary as an environmental factor. Desirable is a mode in which abrasion marks with a pitch of abrasion thread of 1 mm or more are formed. Thus, if the component that contacts a road during running, which is expected to be worn, is worn at a rate satisfying this mode, the fibers can be utilized in a tensile mode, and further the above-described fluff can easily appear on the surface of the component that contacts a road during running.

Accordingly, since if tension is applied, the short cellulose fiber bears the tensile force to provide resistance, and also since the short fiber having an average fiber length of 10 μm to 10 mm is present in an amount of 0.1 to 20 parts by mass, road surface following properties do not greatly deteriorate, and micro-adhesion between the road and the component that contacts a road during running is improved. Consequently, dry grip performance can be improved while maintaining or improving good abrasion resistance.

The styrene-butadiene rubber (SBR) in the rubber composition for a component that contacts a road during running is not particularly limited, and may suitably be as described earlier.

The amount of SBR based on 100% by mass of the rubber component is 60% by mass or more, preferably 70% by mass or more, still more preferably 80% by mass or more, and may be 100% by mass. The presence of less than 60% by mass of SBR tends to result in insufficient dry grip performance.

Examples of rubbers other than SBR that can be included in the rubber component include those mentioned above, and they can be suitably used.

The short cellulose fiber may suitably be as described earlier.

The amount of the short cellulose fiber per 100 parts by mass of the rubber component is 0.1 to 20 parts by mass. In this case, a moderate E* anisotropy and good motion performance can be obtained. The lower limit of the amount is preferably 0.3 parts by mass or more, more preferably 1.0 part by mass or more. The addition of less than 0.1 parts by mass of the short cellulose fiber may not produce the effect of the short cellulose fiber. The upper limit of the amount is preferably 10 parts by mass or less, more preferably 5 parts by mass or less. With more than 20 parts by mass of the short cellulose fiber, the fibers may interact with each other to cause hardening in three directions, thereby adversely resulting in a reduction in anisotropy. Further, E* may become too high, allowing the rubber to slide on the road.

The rubber composition for a component that contacts a road during running preferably contains a silica and/or carbon black each having a predetermined nitrogen adsorption specific surface area. In this case, excellent dry grip performance and excellent abrasion resistance can be obtained.

The nitrogen adsorption specific surface area ($N_2SA$) of the silica or carbon black preferably falls within the range indicated above.

The combined amount of the silica and the carbon black per 100 parts by mass of the rubber component is preferably 60 parts by mass or more, more preferably 80 parts by mass or more, still more preferably 100 parts by mass or more, particularly preferably 110 parts by mass or more. With the combined amount of less than 60 parts by mass, sufficient dry grip performance or abrasion resistance may not be obtained. The combined amount is also preferably 200 parts by mass or less, more preferably 170 parts by mass or less, still more preferably 140 parts by mass or less. With the combined amount of more than 200 parts by mass, fuel economy or ride quality may deteriorate.

When either the silica or carbon black is incorporated, the amount of the silica or carbon black may also suitably be adjusted to the combined amount indicated above.

The rubber composition for a component that contacts a road during running preferably contains an alkylphenol resin. This can improve dry grip performance while ensuring good abrasion resistance.

The alkylphenol resin is not particularly limited, and may suitably be as described earlier.

The amount of the alkylphenol resin per 100 parts by mass of the rubber component is preferably 1 part by mass or more, more preferably 10 parts by mass or more, still more preferably 20 parts by mass or more, but is preferably 120 parts by mass or less, more preferably 80 parts by mass or less, still more preferably 70 parts by mass or less. The use of less than 1 part by mass of the alkylphenol resin may provide an insufficient adhesion effect so that dry grip performance cannot be improved. The use of more than 120 parts by mass of the alkylphenol resin may deteriorate abrasion resistance.

The rubber composition for a component that contacts a road during running preferably contains a terpene aromatic resin or a hydrogenated terpene aromatic resin. This can improve dry grip performance while ensuring good

abrasion resistance. The terpene aromatic resin and hydrogenated terpene aromatic resin may suitably be as described earlier.

The amount of the hydrogenated terpene aromatic resin per 100 parts by mass of the rubber component is preferably 1 part by mass or more, more preferably 10 parts by mass or more, still more preferably 15 parts by mass or more, but is preferably 100 parts by mass or less, more preferably 80 parts by mass or less, still more preferably 60 parts by mass or less. The use of less than 1 part by mass of the hydrogenated terpene aromatic resin may provide an insufficient adhesion effect so that dry grip performance cannot be improved. The use of more than 100 parts by mass of the hydrogenated terpene aromatic resin may not improve grip performance and may also deteriorate abrasion resistance.

The rubber composition for a component that contacts a road during running may appropriately contain compounding agents as described earlier, in addition to the above components.

The rubber composition for a component that contacts a road during running can be prepared by conventionally known methods. For example, components other than sulfur and vulcanization accelerators are kneaded using a rubber kneading machine such as a Banbury mixer or an open roll mill (base kneading step), and subsequently the kneaded mixture is kneaded with the sulfur and vulcanization accelerators (final kneading step), followed by vulcanization, whereby the rubber composition can be prepared.

In particular, the rubber composition for a component that contacts a road during running is preferably prepared from a masterbatch containing the short cellulose fiber and the rubber component. In this case, dry grip performance, particularly traction in the tire circumferential direction, can be significantly improved while maintaining or improving good abrasion resistance.

The masterbatch may suitably be as described earlier and may be prepared as described earlier or by other methods.

Moreover, the tire for motorcycles of the present invention can be produced as described earlier.

In the tire for motorcycles of the present invention, the component that contacts a road during running preferably has a contact zone in which the short cellulose fiber is aligned at 0° to 45°, more preferably at 0° to 30° to the circumferential direction. In other words, in a suitable embodiment of the tire, the short cellulose fiber present on the surface of the component that contacts a road during running is at least partially oriented at the above angle with respect to the circumferential direction of the tire (running direction).

In such a tire, very high traction in the tire circumferential direction can be exhibited while maintaining or improving good abrasion resistance, and straight grip force can be significantly improved because the short cellulose fiber around the center of contact of the tire resists side force, and the fiber bundles are opened by compression to form fluff. It is not necessary for the fiber to form an angle over the entire width of the component that contacts a road during running (the entire width of the tread). It is also effective to use the fiber-containing compound only around the crown where the contact pressure is high.

The term "component that contacts a road during running" refers to a component which comes into contact with the road surface during running, and examples include those mentioned earlier.

The component that contacts a road during running may be formed as follows: an unvulcanized rubber composition for a component that contacts a road during running (rubber kneadate) is extruded in an extruder into a model shape of the component that contacts a road during running or a flat sheet strip having a thickness of about 1 to 3 mm, where the fiber is aligned in the longitudinal direction by the pressure of extrusion. The sheet (strip) for the component that contacts a road during running is tightly attached to a cylindrical building drum to create a profile with a predetermined gauge. Desirably, the short cellulose fiber is aligned in the tire circumferential direction, for example, oriented at 0° as described above. The fiber in the circumferential direction in the ground contact area does not undergo compression deformation during straight running, so that circumferential traction is improved.

## EXAMPLES

The chemicals used in examples and comparative examples are listed below.

NR>

TSR20

<SBR>

Modified SBR: prepared as described below (extender oil: 37.5 parts, styrene content: 41%, vinyl content: 40%, Tg: -29°C, weight average molecular weight: 1,190,000)

NS522: available from Zeon Corporation (extender oil: 37.5 parts, styrene content: 39%, vinyl content: 40%, Tg: -34°C, weight average molecular weight: 840,000)
NS612: available from Zeon Corporation (non-oil extended, styrene content: 15%, vinyl content: 30%, Tg: -65°C, weight average molecular weight: 780,000)

(Method for preparing modified SBR)

(1) Preparation of chain end modifier

A 250 mL measuring flask in a nitrogen atmosphere was charged with 20.8 g of 3-(N,N-dimethylamino)-propyltrimethoxysilane (available from AZmax. Co.) and then with anhydrous hexane (available from Kanto Chemical Co., Inc.) to give a total volume of 250 mL, whereby a chain end modifier was prepared.

(2) Preparation of modified SBR

A sufficiently nitrogen-purged, 30 L pressure-resistant vessel was charged with 18 L of n-hexane, 800 g of styrene (available from Kanto Chemical Co., Inc.), 1,200 g of butadiene, and 1.1mmol of tetramethylethylenediamine, and the temperature was raised to 40°C. Next, after 1.8 mL of 1.6 M butyllithium (available from Kanto Chemical Co., Inc.) was added to the mixture, the temperature was raised to 50°C, followed by stirring for three hours. Subsequently, 4.1 mL of the chain end modifier was added to the resulting mixture, followed by stirring for 30 minutes. After 15 mL of methanol and 0.1 g of 2,6-tert-butyl-p-cresol (available from Ouchi Shinko Chemical Industrial Co. , Ltd.) were added to the reaction solution, 1,200 g of TDAE was added and stirred for ten minutes. Thereafter, aggregates were recovered from the polymer solution by steam stripping. The aggregates were dried under reduced pressure for 24 hours to obtain a modified SBR. The modified SBR had a bound styrene content of 41% by mass, a Mw of 1,190,000, and a vinyl content of 40 mol%.

<BR>

CB24: available from LANXESS, high-cis BR synthesized using a Nd catalyst

<Short aramid fiber>

AFP-40: available from Lanxess, average fiber length: 1.5 mm, fiber content: 40% by mass, EPDM: 60% by mass

<Short cellulose fiber>

Santweb DX (SBR MB1): available from Lanxess, average fiber length: 1.5 mm, average fiber diameter: 5 to 15 μm, fiber content: 73% by mass, oil: 14% by mass, E-SBR: 9% by mass, carbon black: 4% by mass
SBR MB2: average fiber length: 100 μm, average fiber diameter: 5 to 15 μm, fiber content: 73% by mass, oil: 14% by mass, E-SBR: 9% by mass, carbon black: 4% by mass (produced as described below)
SBR MB3: average fiber length: 5 μm, average fiber diameter: 5 to 15 μm, fiber content: 73% by mass, oil: 14% by mass, E-SBR: 9% by mass, carbon black: 4% by mass (produced as described below)
SBR MB4: average fiber length: 12 mm, average fiber diameter: 5 to 15 μm, fiber content: 73% by mass, oil: 14% by mass, E-SBR: 9% by mass, carbon black: 4% by mass (produced as described below):
NR masterbatch 1 (NR MB1): NR 100 parts by mass/short cellulose fiber (average fiber length: 100 μm) 20 parts by mass/flocculant 0.5 parts by mass (produced as described below)
NR masterbatch 2 (NR MB2): NR 100 parts by mass/short cellulose fiber (average fiber length: 60 μm) 20 parts by mass/flocculant 0.5 parts by mass (produced as described below)
NR masterbatch 3 (NR MB3): NR 100 parts by mass/short cellulose fiber (average fiber length: 5 μm) 20 parts by mass/flocculant 0.5 parts by mass (produced as described below)

[Production of SBR MB2 to SBR MB4]

During the production of E-SBR, into the suspension after polymerization of monomers containing a surfactant were simultaneously introduced mechanically ground cellulose fiber (with a length of millimeters), carbon black, and an oil, and the mixture was stirred, coagulated, dehydrated, and dried to prepare a trial product (masterbatch) 2, 3, or 4

containing SBR, short cellulose fiber, carbon black, and oil.

The number average fiber diameter and number average fiber length of the short cellulose fiber were measured using a scanning probe microscope (available from Hitachi High-Tech Science Corporation) as described above.

[Production of NR MB1 to NR MB3]

(Preparation of short cellulose fiber solutions)

A microfibrillated plant fiber was diluted with a 200-fold amount (by mass) of water. The dilution was stirred with a homogenizer to obtain a microfibrillated plant fiber solution having a microfibrillated plant fiber content (hereinafter, also referred to as concentration of the solution) of 0.5% to 2.5% by mass. In this process, the loosening of the microfibrillated plant fiber was controlled by changing the stirring time or the type of homogenizer. Accordingly, microfibrillated plant fiber solutions (short cellulose fiber solutions) with an average fiber length of 100 μm, 60 μm, or 5 μm were prepared.

(Analysis of short cellulose fiber solutions)

The average fiber length (volume average length, hereinafter also referred to as fiber length) of the short cellulose fiber in each short cellulose fiber solution was analyzed with a laser diffraction/scattering particle size distribution analyzer (LA-910 available from Horiba, Ltd.) at a room temperature (23°C).

(Preparation of NR masterbatches)

The solids concentration (DRC) of natural rubber latex was adjusted to 30% (w/v). To 1,000 g of the natural rubber latex were added 10 g of a surfactant and 20 g of NaOH, and the mixture was subjected to saponification at room temperature for 48 hours to obtain a saponified natural rubber latex.

Then, 5 g of an antioxidant was added to the saponified natural rubber latex.

Next, the saponified natural rubber latex and the microfibrillated plant fiber solution (short cellulose fiber solution) were weighed and adjusted to give a ratio (by mass) of 100 parts by mass NR/20 parts by mass cellulose fiber in dry state. Then, they were stirred using a stirrer at 300 rpm for two hours (for the microfibrillated plant fiber solution with an average fiber length of 100 μm), four hours (for the microfibrillated plant fiber solution with an average fiber length of 60 μm) , or ten hours (for the microfibrillated plant fiber solution with an average fiber length of 5 μm).

Next, 0.5 parts by mass of a flocculant (per 100 parts by mass of NR) was added to the stirred mixture and they were stirred with a stirrer at 300 rpm for two minutes.

Thereafter, a coagulant was added stepwise to the mixture with stirring using a stirrer at 300 rpm and a temperature of 30°C to 35°C to adjust the pH to 4 to 7, thereby obtaining a coagulum. The stirring was carried out for one hour. The coagulum was repeatedly washed with 1,000 mL of water.

Then, the coagulum was air-dried for a few hours, followed by vacuum drying at 40°C for 12 hours. Thus, NR masterbatches 1 to 3 (NR MB1 to NR MB3) having the mass ratios indicated above were prepared.

The following materials were used.

Natural rubber latex: field latex available from Muhibbah Lateks
Neofiber: Neofiber (microfibrillated plant fiber) available from Oji Seitai Co., Ltd.
Surfactant: EMAL E (sodium polyoxyethylene lauryl ether sulfate) available from Kao Corporation
NaOH: NaOH available from Wako Pure Chemical Industries, Ltd.
Antioxidant: Wingstay L (t-butylated condensate of p-cresol and dicyclopentadiene) available from Eliokem
Flocculant: C-303H (strong cation) available from MT AquaPolymer, Inc.
Coagulant: 1% sulfuric acid available from Wako Pure Chemical Industries, Ltd.

<Carbon black>

HP180: available from Orion Engineered Carbons ($N_2SA$: 175 $m^2/g$)
HP160: available from Orion Engineered Carbons ($N_2SA$: 153 $m^2/g$)
EB201: pilot product available from Orion Engineering (former Evonik) ($N_2SA$: estimated 240 $m^2/g$)
N110: SHOBLACK N110 available from Cabot Japan K. K. ($N_2SA$: 142 $m^2/g$)

<Silica>

U9000: ULTRASIL U9000 available from Evonik Degussa ($N_2SA$: 230 $m^2/g$)

<Aluminum hydroxide>

ATH#C: available from Sumitomo Chemical Co., Ltd. ($N_2SA$: 7.0 $m^2/g$, average particle size: 0.8 $\mu m$)
ATH#B: available from Sumitomo Chemical Co., Ltd. ($N_2SA$: 15 $m^2/g$, average particle size: 0.6 $\mu m$)

<Plasticizer>

TOP: tris(2-ethylhexyl) phosphate (freezing point: -70°C or lower, flash point: 204°C, SP value: 8.1, Mw: 435) available from Daihachi Chemical Industry Co., Ltd.
TDAE oil: Vivatec 500 available from H&R

<Resin>

Koresin: alkylphenol resin (p-t-butylphenol-acetylene condensation resin, Mw: 400, OH value: 320 mg KOH/g, softening point: 145°C, Tg: 98°C) available from BASF
M125: YS Polyster M125 (terpene resin, hydrogenated aromatic modified terpene, softening point: 125°C, Tg: 69°C, SP value: 8.52) available from Yasuhara Chemical Co., Ltd.

<Zinc oxide>

Zinc oxide #2: Ginrei R available from Toho Zinc Co., Ltd.

<Silane coupling agent>

NXT: available from Momentive Performance Materials Inc. ($(C_2H_5O)_3Si-C_3H_6-S-CO-C_7H_{15}$)

<Antioxidant>

Wax: Ozoace 0355 available from Nippon Seiro Co., Ltd.
6PPD: Antigene 6C (N-(1,3-dimethylbutyl)-N'-phenyl-p-phenylenediamine) available from Sumitomo Chemical Co., Ltd.
TMQ: Nocrac 224 (2,2,4-trimethyl-1,2-dihydroquinoline polymer) available from Ouchi Shinko Chemical Industrial Co., Ltd.

<Vulcanizing agent>

Stearic acid: stearic acid "TSUBAKI" available from NOF Corporation
5% oil-containing powdered sulfur: HK-200-5 available from Hosoi Chemical Industry Co., Ltd.
TBBS: Nocceler NS-G (N-tert-butyl-2-benzothiazolyl sulfenamide) available from Ouchi Shinko Chemical Industrial Co., Ltd.
TBZTD: Perkacit TBZTD (tetrabenzyl thiuram disulfide) available from Flexsys

[Examples and Comparative Examples (tires for four-wheeled racing vehicles)]

According to the formulation and the kneading conditions of each example listed in Tables 1-1 to 1-4, the total amounts of the chemicals other than the sulfur and vulcanization accelerators were first kneaded for five minutes at a discharge temperature of 150°C in a 4 L Banbury mixer (base kneading). Next, the sulfur and vulcanization accelerators were added to the kneaded mixture, and they were kneaded for four minutes in an open roll mill to obtain an unvulcanized rubber composition (final kneading). During this step, the maximum rubber temperature was adjusted to 95°C.
The unvulcanized rubber composition was shaped into a tread, assembled with other tire components while controlling the orientation angle of the fiber on a tire building machine, and press-vulcanized at 160°C for 20 minutes to obtain a test tire (tire size: 215/45R17 summer, for (four-wheeled) racing vehicles).
The test tires prepared as above were evaluated as follows. Tables 1-1 to 1-4 show the results.

(Dry grip performance)

The test tires were mounted on a front-engine, rear-wheel-drive car of 2,000 cc displacement made in Japan. The car was subjected to a 500 km long run at the Okayama International Circuit in Japan.
Running mode: severe handling including sharp figure-of-eight turns and reducing the main tread grooves by about 1 mm per 20-km running.
During the run, the test driver evaluated stability in steering control, particularly in terms of side grip force. The results are expressed as an index, with Comparative Example 1-1 set equal to 100. A higher index indicates better dry grip performance. The dry grip performance target is 107 or higher.

(Abrasion resistance)

The test tires were mounted on a front-engine, rear-wheel-drive car of 2,000 cc displacement made in Japan. The car was subjected to a 500 km long run at the Okayama International Circuit in Japan.
Running mode: Severe handling including sharp figure-of-eight turns and reducing the main tread grooves by about 1 mm per 20-km running.
After the run, the remaining groove depth in the tire tread rubber (initial depth: 8.0mm) was measured to evaluate abrasion resistance. A larger average depth of the remaining main grooves indicates better abrasion resistance. The remaining groove depths are expressed as an index, with Comparative Example 1-1 set equal to 100. A higher index indicates better abrasion resistance. The abrasion resistance target is 95 or higher.

[Table 1-1]

| Tread (component that contacts road during running) | | | Example 1-1 | 1-2 | 1-3 | 1-4 | 1-5 | 1-6 | 1-7 | 1-8 | 1-9 | 1-10 | 1-11 | 1-12 | 1-13 | 1-14 | 1-15 |
|---|---|---|---|---|---|---|---|---|---|---|---|---|---|---|---|---|---|
| NR | TSR20 | | | | | | | | | | | | | | 30 | | |
| SBR | Modified SBR | extender oil 37.5 parts, Styr41%,Vyn40%,Tg-29, Mw 1,190,000 | 137.5 | 137.5 | 116.88 | 116.88 | 137.5 | 137.5 | 137.5 | 137.5 | 137.5 | 137.5 | 137.5 | 96.25 | 96.25 | 96.25 | |
| | NS522 | extender oil 37.5 parts, Styr39,Vny40, Tg -34, Mw 840,000 | | | | | | | | | | | | | | | 137.5 |
| | NS612 | non-oil extended, Styr15, Vynl30, Tg -65, Mw 780,000 | | | | | | | | | | | | | | 30 | |
| BR | CB24 | high-cis Nd-catalyzed BR | | | | | | | | | | | | 30 | | | |
| Short aramid fiber | AFP-40 | L = 1.5mm, fiber content 40wt%, EPDM 60wt% | | | | | | | | | | | | | | | |
| Short cellulose fiber | Santweb DX (SBR MB1) | L = 1.5mm, fiber content 73wt% | 4 | | | | 2 | 10 | 4 | 4 | 4 | 4 | 4 | 4 | 4 | 4 | 4 |
| | SBR MB2 | L = 100 μ m, fiber content 73wt% | | 4 | | | | | | | | | | | | | |
| | SBR MB3 | L = 5 μ m, fiber content 73wt% | | | | | | | | | | | | | | | |
| | SBR MB4 | L = 12mm, fiber content 73wt% | | | | | | | | | | | | | | | |
| | NR MB1 | L = 100 μ m, MB1, fiber content 16.6wt% | | | 18 | | | | | | | | | | | | |
| | NR MB2 | L = 60 μ m, MB2, fiber content 16.6wt% | | | | 18 | | | | | | | | | | | |
| | NR MB3 | L = 5 μ m, MB3, fiber content 16.6wt% | | | | | | | | | | | | | | | |
| | Fiber content (phr) | | 2.92 | 2.92 | 2.99 | 2.99 | 1.46 | 7.3 | 2.92 | 2.92 | 2.92 | 2.92 | 2.92 | 2.92 | 2.92 | 2.92 | 2.92 |
| Carbon black | HP180 | HP180 BET 175, Ctab 181 | 115 | 115 | 115 | 115 | 115 | 115 | | | | | 70 | 115 | 115 | 115 | 115 |
| | HP160 | HP160 BET 153, Ctab 158 | | | | | | | 125 | | | | | | | | |
| | EB201 | BET 240, Ctab 204 | | | | | | | | 105 | | | | | | | |
| | N110 | Shoblack N110, BET 142, Ctab 119 | | | | | | | | | 130 | 90 | | | | | |
| Silica | U9000 | BET 230 | | | | | | | | | | 50 | 50 | | | | |
| Aluminum hydroxide | ATH#C | 0.8 μ m, BET 7 | | | | | | | | | | | | | | | |
| | ATH#B | 0.6 μ m, BET 15 | | | | | | | | | | | | 10 | 10 | 10 | |
| Plasticizer | TOP | freezing point -70°C or lower, butyl 2-ethylhexyl group, flash point 204°C | 10 | 10 | 10 | 10 | 10 | 10 | 10 | 10 | 20 | 20 | 20 | 20 | 10 | 10 | 10 |
| | TDAE oil | Vivatec 500, Tg -58°C | 15 | 15 | 0 | 0 | 10 | 15 | 15 | 15 | 0 | 0 | 0 | 0 | 15 | 15 | 15 |
| Resin | Koresin | softening point 145, Tg 98°C | 20 | 20 | 35 | 35 | 30 | 20 | 20 | 20 | 35 | 35 | 35 | 35 | 20 | 20 | 20 |
| | Hydrogenated aromatic modified terpene M125 | softening point 125°C | 10 | 10 | 10 | 10 | 10 | 10 | 10 | 10 | 20 | 20 | 20 | 20 | 10 | 10 | 10 |
| Zinc oxide | Zinc oxide #2 | Ginrei R | 2 | 2 | 2 | 2 | 2 | 2 | 2 | 2 | 2 | 2 | 2 | 2 | 2 | 2 | 2 |
| Silane coupling agent | NXT | product of Momentive (8% relative to silica) | | | | | | | | | | 4 | 4 | | | | |
| Antioxidant | Wax | Ozoace 0355 | 1 | 1 | 1 | 1 | 1 | 1 | 1 | 1 | 1 | 1 | 1 | 1 | 1 | 1 | 1 |
| | 6PPD | Antigene 6C | 3 | 3 | 3 | 3 | 3 | 3 | 3 | 3 | 3 | 3 | 3 | 3 | 3 | 3 | 3 |
| | TMQ | Nocrac 224 | 1 | 1 | 1 | 1 | 1 | 1 | 1 | 1 | 1 | 1 | 1 | 1 | 1 | 1 | 1 |
| Vulcanizing agent | Stearic acid | Tsubaki | 3 | 3 | 3 | 3 | 3 | 3 | 3 | 3 | 3 | 3 | 3 | 3 | 3 | 3 | 3 |
| | 5% oil-containing powdered sulfur | HK-200-5 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 |
| | TBBS | Nocceler NS-G | 3 | 3 | 3 | 3 | 3 | 3 | 3 | 3 | 3 | 3 | 3 | 3 | 3 | 3 | 3 |
| | TBZTD | Perkacit | 2 | 2 | 2 | 2 | 2 | 2 | 2 | 2 | 2 | 2 | 2 | 2 | 2 | 2 | 2 |
| | | Total amount | 327.6 | 327.6 | 320.98 | 320.98 | 330.6 | 333.6 | 337.6 | 317.6 | 362.6 | 376.6 | 356.6 | 346.35 | 326.35 | 326.35 | 327.6 |
| Fiber orientation angle | Angle to circumferential direction 90° corresponds to radial direction. | | 90 | 90 | 90 | 90 | 90 | 90 | 90 | 90 | 90 | 90 | 90 | 90 | 90 | 90 | 90 |
| Actual vehicle performance | Hs adjusted to 65+/-2 | measured with Hs tester after tire production | | | | | | | | | | | | | | | |
| | Dry grip index | Target ≥ 107 | 120 | 115 | 108 | 107 | 108 | 114 | 120 | 122 | 110 | 108 | 113 | 113 | 112 | 111 | 115 |
| | Abrasion index | Target ≥ 95 | 102 | 105 | 95 | 98 | 100 | 95 | 100 | 106 | 95 | 95 | 98 | 110 | 97 | 106 | 95 |

[Table 1-2]

| Tread (component that contacts road during running) | | | Example | | | | |
|---|---|---|---|---|---|---|---|
| | | | 1-16 | 1-17 | 1-18 | 1-19 | 1-20 |
| NR | TSR20 | | | | | | |
| SBR | Modified SBR | extender oil 37.5 parts, Styr41%,Vyn40%, Tg-29, Mw 1,190,000 | 137.5 | 137.5 | 137.5 | 137.5 | 137.5 |
| | NS522 | extender oil 37.5 parts, Styr39,Vny40, Tg -34, Mw 840,000 | | | | | |
| | NS612 | non-oil extended, Styr15, Vynl30, Tg-65, Mw 780,000 | | | | | |
| BR | CB24 | high-cis Nd-catalyzed BR | | | | | |
| Short aramid fiber | AFP-40 | L = 1.5mm, fiber content 40wt%, EPDM 60wt% | | | | | |
| Short cellulose fiber | Santweb DX (SBR MB1) | L = 1.5mm, fiber content 73wt% | 4 | 4 | 4 | 4 | 4 |
| | SBR MB2 | L = 100 $\mu$m, fiber content 73wt% | | | | | |
| | SBR MB3 | L = 5 $\mu$m, fiber content 73wt% | | | | | |
| | SBR MB4 | L = 12mm, fiber content 73wt% | | | | | |
| | NR MB1 | L = 100 $\mu$m, MB1, fiber content 16.6wt% | | | | | |
| | NR MB2 | L = 60 $\mu$m, MB2, fiber content 16.6wt% | | | | | |
| | NR MB3 | L = 5 $\mu$m, MB3, fiber content 16.6wt% | | | | | |
| | Fiber content (phr) | | 2.92 | 2.92 | 2.92 | 2.92 | 2.92 |
| Carbon black | HP180 | HP180 BET 175, Ctab 181 | 115 | 115 | 115 | 115 | 115 |
| | HP160 | HP160 BET 153, Ctab 158 | | | | | |
| | EB201 | BET 240, Ctab 204 | | | | | |
| | N110 | Shoblack N110, BET 142, Ctab 119 | | | | | |
| Silica | U9000 | BET 230 | | | | | |
| Aluminum hydroxide | ATH#C | 0.8 $\mu$m, BET 7 | | | | | 10 |
| | ATH#B | 0.6 $\mu$m, BET 15 | | | | 10 | |

(continued)

| Tread (component that contacts road during running) | | | Example | | | | |
|---|---|---|---|---|---|---|---|
| | | | 1-16 | 1-17 | 1-18 | 1-19 | 1-20 |
| Plasticizer | TOP | freezing point -70°C or lower, butyl 2-ethylhexyl group, flash point 204°C | 10 | 10 | 10 | 10 | 10 |
| | TDAE oil | Vivatec500, Tg -58°C | 15 | 15 | 15 | 15 | 15 |
| Resin | Koresin | softening point 145, Tg 98°C | 20 | 20 | 20 | 20 | 20 |
| | Hydrogenated aromatic modified terpene M125 | softening point 125°C | 10 | 10 | 10 | 10 | 10 |
| Zinc oxide | Zinc oxide #2 | Ginrei R | 2 | 2 | 2 | 2 | 2 |
| Silane coupling agent | NXT | product of Momentive (8% relative to silica) | | | | | |
| Antioxidant | Wax | Ozoace0355 | 1 | 1 | 1 | 1 | 1 |
| | 6PPD | Antigene 6C | 3 | 3 | 3 | 3 | 3 |
| | TMQ | Nocrac 224 | 1 | 1 | 1 | 1 | 1 |
| Vulcanizing agent | Stearic acid | Tsubaki | 3 | 3 | 3 | 3 | 3 |
| | 5% oil-containing powdered sulfur | HK-200-5 | 1.10 | 1.10 | 1.10 | 1.10 | 1.10 |
| | TBBS | Nocceler NS-G | 3 | 3 | 3 | 3 | 3 |
| | TBZTD | Perkacit | 2 | 2 | 2 | 2 | 2 |
| | | Total amount | 327.6 | 327.6 | 327.6 | 337.6 | 337.6 |
| Fiber orientation angle | Angle to circumferential direction 90° corresponds to radial direction. | | 60 | 30 | 0 | 90 | 90 |
| Actual vehicle performance | Hs adjusted to 65+/-2 | measured with Hs tester after tire production | | | | | |
| | Dry grip index | Target ≥ 107 | 115 | 112 | 110 | 125 | 126 |
| | Abrasion index | Target ≥ 95 | 102 | 102 | 102 | 97 | 95 |

[Table 1-3]

| Tread (component that contacts road during running) | | | Comparative Example | | | | | | | | | | |
|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 |
| NR | TSR20 | | | 45 | | | | | | | | 50 | |
| SBR | Modified SBR | extender oil 37.5 parts, Styr41%, Vyn40%, Tg-29, Mw 1,190,000 | 137.5 | 75.63 | 137.5 | 133.9 | 137.5 | 137.5 | 137.5 | 116.88 | 68.75 | 68.75 | 137.5 |
| | NS522 | extender oil 37.5 parts, Styr39,Vny40, Tg -34, Mw 840,000 | | | | | | | | | | | |
| | NS612 | non-oil extended, Styr15, Vynl30, Tg -65, Mw 780,000 | | | | | | | | | | | |
| BR | CB24 | high-cis Nd-catalyzed BR | | | | | | | | | 50 | | |
| Short aramid fiber | AFP-40 | L = 1.5mm, fiber content 40wt%, EPDM 60wt% | | | | | | | | | | | 7.3 |

(continued)

| Tread (component that contacts road during running) | | | Comparative Example | | | | | | | | | | |
|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 |
| Short cellulose fiber | Santweb DX (SBR MB1) | L = 1.5mm, fiber content 73wt% | | 4 | 0.1 | 29 | | | 4 | | 4 | 4 | |
| | SBR MB2 | L = 100 μ m, fiber content 73wt% | | | | | | | | | | | |
| | SBR MB3 | L = 5 μm, fiber content 73wt% | | | | | 4 | | | | | | |
| | SBR MB4 | L = 12mm, fiber content 73wt% | | | | | | 4 | | | | | |
| | NR MB1 | L = 100 μm, MB1, fiber content 16.6wt% | | | | | | | | | | | |
| | NR MB2 | L = 60 μ m, MB2, fiber content 16.6wt% | | | | | | | | | | | |
| | NR MB3 | L = 5 μm, MB3, fiber content 16.6wt% | | | | | | | | 18 | | | |
| | Fiber content (phr) | | 0 | 2.92 | 0.073 | 21.1 | 2.92 | 2.92 | 2.92 | 2.99 | 2.92 | 2.92 | 2.92 |
| Carbon black | HP180 | HP180 BET 175, Ctab 181 | 115 | 115 | 115 | 115 | 115 | 115 | 55 | 115 | 115 | 115 | 115 |
| | HP160 | HP160 BET 153, Ctab 158 | | | | | | | | | | | |
| | EB201 | BET 240, Ctab 204 | | | | | | | | | | | |
| | N110 | Shoblack N110, BET 142, Ctab 119 | | | | | | | | | | | |
| Silica | U9000 | BET 230 | | | | | | | | | | | |
| Aluminum hydroxide | ATH#C | 0.81 μm, BET 7 | | | | | | | | | | | |
| | ATH#B | 0.6 μ m, BET 15 | | | | | | | 60 | | 10 | 10 | |

(continued)

| Tread (component that contacts road during running) | | | Comparative Example | | | | | | | | | | |
|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 |
| Plasticizer | TOP | freezing point-70°C or lower, butyl 2-ethylhexyl group, flash point 204°C | 10 | 10 | 10 | 10 | 10 | 10 | 0 | 10 | 20 | 20 | 10 |
| | TDAE oil | Vivatec 500, Tg -58°C | 15 | 15 | 15 | 15 | 15 | 15 | 0 | 15 | 0 | 0 | 15 |
| Resin | Koresin | softening point 145, Tg 98°C | 20 | 20 | 20 | 20 | 20 | 20 | 0 | 20 | 35 | 35 | 20 |
| | Hydrogenated aromatic modified terpene M125 | softening point 125°C | 10 | 10 | 10 | 10 | 10 | 10 | 10 | 10 | 20 | 10 | 10 |
| Zinc oxide | Zinc oxide #2 | Ginrei R | 2 | 2 | 2 | 2 | 2 | 2 | 2 | 2 | 2 | 2 | 2 |
| Silane coupling agent | NXT | product of Momentive (8% relative to silica) | | | | | | | | | | | |
| Antioxidant | Wax | Ozoace 0355 | 1 | 1 | 1 | 1 | 1 | 1 | 1 | 1 | 1 | 1 | 1 |
| | 6PPD | Antigene 6C | 3 | 3 | 3 | 3 | 3 | 3 | 3 | 3 | 3 | 3 | 3 |
| | TMQ | Nocrac 224 | 1 | 1 | 1 | 1 | 1 | 1 | 1 | 1 | 1 | 1 | 1 |
| Vulcanizing agent | Stearic acid | Tsubaki | 3 | 3 | 3 | 3 | 3 | 3 | 3 | 3 | 3 | 3 | 3 |
| | 5% oil-containing powdered sulfur | HK-200-5 | 1.10 | 1.10 | 1.10 | 1.10 | 1.10 | 1.10 | 1.80 | 1.10 | 1.10 | 1.10 | 1.10 |
| | TBBS | Nocceler NS-G | 3 | 3 | 3 | 3 | 3 | 3 | 3 | 3 | 3 | 3 | 3 |
| | TBZTD | Perkacit | 2 | 2 | 2 | 2 | 2 | 2 | 2 | 2 | 2 | 2 | 2 |
| | | Total amount | 323.6 | 310.73 | 323.7 | 349 | 327.6 | 327.6 | 283.3 | 320.98 | 338.85 | 328.85 | 330.9 |

(continued)

| Tread (component that contacts road during running) | | | Comparative Example | | | | | | | | | | |
|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 |
| Fiber orientation angle | Angle to circumferential direction 90° corresponds to radial direction. | | 90 | 90 | 90 | 90 | 90 | 90 | 90 | 90 | 90 | 90 | 90 |
| Actual vehicle performance | Hs adjusted to 65+/-2 | measured with Hs tester after tire production | | | | | | | | | | | |
| | Dry grip index | Target ≥ 107 | 100 | 98 | 102 | 97 | 106 | 96 | 88 | 95 | 85 | 97 | 85 |
| | Abrasion index | Target ≥ 95 | 100 | 87 | 102 | 75 | 100 | 70 | 65 | 88 | 112 | 87 | 75 |

[Table 1-4]

| Tread (component that contacts road during running) | | | Example | |
|---|---|---|---|---|
| | | | 1-21 | 1-22 |
| NR | TSR20 | | | |
| SBR | Modified SBR | extender oil 37.5 parts, Styr41%,Vyn40%, Tg-29, Mw 1,190,000 | 137.5 | 137.5 |
| | NS522 | extender oil 37.5 parts, Styr39,Vny40, Tg-34, Mw 840,000 | | |
| | NS612 | non-oil extended, Styr15, Vynl30, Tg-65, Mw 780,000 | | |
| BR | CB24 | high-cis Nd-catalyzed BR | | |
| Short aramid fiber | AFP-40 | L = 1.5mm, fiber content 40wt%, EPDM 60wt% | | |
| Short cellulose fiber | Santweb DX (SBR MB1) | L = 1.5mm, fiber content 73wt% | 4 | 4 |
| | SBR MB2 | L = 100$\mu$m, fiber content 73wt% | | |
| | SBR MB3 | L = 5$\mu$m, fiber content 73wt% | | |
| | SBR MB4 | L = 12mm, fiber content 73wt% | | |
| | NR MB1 | L = 100$\mu$m, MB1, fiber content 16.6wt% | | |
| | NR MB2 | L = 60 $\mu$m, MB2, fiber content 16.6wt% | | |
| | NR MB3 | L = 5$\mu$m, MB3, fiber content 16.6wt% | | |
| | Fiber content (phr) | | 2.92 | 2.92 |
| Carbon black | HP180 | HP180 BET 175, Ctab 181 | 115 | 115 |
| | HP160 | HP160 BET 153, Ctab 158 | | |
| | EB201 | BET 240, Ctab 204 | | |
| | N110 | Shoblack N110, BET 142, Ctab 119 | | |
| Silica | U9000 | BET 230 | | |
| Aluminum hydroxide | ATH#C | 0.8$\mu$m, BET 7 | | |
| | ATH#B | 0,6$\mu$m, BET 15 | | |
| Plasticizer | TOP | freezing point -70°C or lower, butyl 2-ethylhexyl group, flash point 204°C | 10 | 10 |
| | TDAE oil | Vivatec 500, Tg -58°C | 15 | 15 |

(continued)

| Tread (component that contacts road during running) | | | Example | |
|---|---|---|---|---|
| | | | 1-21 | 1-22 |
| Resin | Koresin | softening point 145, Tg 98°C | 20 | 20 |
| | Hydrogenated aromatic modified terpene M125 | softening point 125°C | 10 | 10 |
| Zinc oxide | Zinc oxide #2 | Ginrei R | 2 | 2 |
| Silane coupling agent | NXT | product of Momentive (8% relative to silica) | | |
| Antioxidant | Wax | Ozoace 0355 | 1 | 1 |
| | 6PPD | Antigene 6C | 3 | 3 |
| | TMQ | Nocrac 224 | 1 | 1 |
| Vulcanizing agent | Stearic acid | *Tsub*aki | 3 | 3 |
| | 5% oil-containing powdered sulfur | HK-200-5 | 1.10 | 1.10 |
| | TBBS | Nocceler NS-G | 3 | 3 |
| | TBZTD | Perkacit | 2 | 2 |
| | | Total amount | 327.6 | 327.6 |
| Fiber orientation angle | Angle of cap tread to circumferential direction 90° corresponds to radial direction. | | 90 | 60L |
| Actual vehicle performance | Hs adjusted to 65+/-2 | measured with Hs tester after tire production | | |
| | Dry grip index | Target ≥ 107 | 130 | 125 |
| | Abrasion index | Target ≥ 95 | 107 | 111 |
| Fiber orientation angle in base tread | | | thickness: 1.5mm, angle: 0° | thickness: 1.5mm, base 60R |

Tables 1-1 to 1-3 demonstrate that racing tires including a component that contacts a road during running which contained predetermined amounts of SBR, a short cellulose fiber having a predetermined fiber length, and a silica and/or carbon black each having a predetermined nitrogen adsorption specific surface area and in which the short fiber was oriented at a predetermined angle with respect to the circumferential direction, exhibited significantly improved side grip force while maintaining or improving good abrasion resistance, thereby achieving a balanced improvement in these properties. Particularly racing tires including a component that contacts a road during running prepared from a masterbatch containing SBR, the short cellulose fiber, and carbon black exhibited excellent properties.

As can be seen from comparison with Examples 1-16 to 1-18 using the same formulation as in Example 1-1 but using different orientation angles, the dry grip performance increased in the following order: 90° (best) > 60° > 30° > 0°. Examples 19 and 20 using the formulation of Example 1-1 with aluminum hydroxide exhibited better dry grip performance.

Furthermore, Table 1-4 shows very large effects of improving abrasion resistance and side grip force in racing tires including a cap tread containing the short cellulose fiber and a base tread containing the cellulose fiber, where the short fibers of each component crossed at a predetermined angle.

[Examples and Comparative Examples (tires for motorcycles)]

According to the formulation and the kneading conditions of each example listed in Tables 2-1 to 2-3, the total amounts of the chemicals other than the sulfur and vulcanization accelerators were first kneaded for five minutes at a

discharge temperature of 150°C in a 4 L Banbury mixer (base kneading). Next, the sulfur and vulcanization accelerators were added to the kneaded mixture, and they were kneaded for four minutes in an open roll mill to obtain an unvulcanized rubber composition (final kneading). During this step, the maximum rubber temperature was adjusted to 95°C.

The unvulcanized rubber composition was shaped into a tread, assembled with other tire components while controlling the orientation angle of the fiber on a tire building machine, and press-vulcanized at 160°C for 20 minutes to obtain a test tire (rear tire for two-wheeled vehicles, size: 180/55ZR17, for racing vehicles).

In Comparative Example 2-12, the angle was changed to 90° with respect to the extrusion direction.

The test tires prepared as above were evaluated as follows . Tables 2-1 to 2-3 show the results.

(Dry grip performance)

The test tires were mounted on a motorcycle, and the motorcycle was evaluated on dry asphalt.
Running mode: several laps (6 km per lap) of a paved circuit for racing, subjective evaluation of straight traction by the driver using a commercially available motorcycle

The results are expressed as an index, with Comparative Example 2-1 set equal to 100. A higher index indicates better straight traction (dry grip performance). The dry grip performance target is 107 or higher.

(Abrasion resistance)

The test tires were mounted on a motorcycle, and the motorcycle was evaluated on dry asphalt.
Running mode: about ten laps (6 km per lap) of a paved circuit for racing

After the run, the presence of abrasions and wear depth were evaluated and expressed as an index. In general, larger surface irregularities due to abrasion indicate more rapid wear depth. The results are expressed as an index, with Comparative Example 2-1 set equal to 100. A higher index indicates better abrasion resistance. The abrasion resistance target is 95 or higher.

[Table 2-1]

| MC Tread (component that contacts road during running) | | | Example | | | | | | | | | | |
|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 |
| NR | TSR20 | | | | | | | | | | | | |
| SBR | Modified SBR | extender oil 37.5 parts. Styr41%, Vyn40%,Tg-29, Mw 1,190,000 | 137.5 | 137.5 | 116.88 | 116.88 | 137.5 | 137.5 | 137.5 | 137.5 | 137.5 | 137.5 | 137.5 |
| | NS522 | extender oil 37.5 parts, Styr39,Vny40, Tg -34, Mw 840,000 | | | | | | | | | | | |
| | NS612 | non-oil extended, Styr15, Vynl30, Tg -65, Mw 780,000 | | | | | | | | | | | |
| BR | CB24 | high-cis Nd-catalyzed BR | | | | | | | | | | | |
| Short aramid fiber | AFP-40 | L = 1.5mm, fiber content 40wt%, EPDM 60wt% | | | | | | | | | | | |

(continued)

| MC Tread (component that contacts road during running) | | | Example | | | | | | | | | | |
|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 |
| Short cellulose fiber | Santweb DX (SBR MB1) | L = 1.5mm, fiber content 73wt% | 4 | | | | 2 | 10 | 4 | 4 | 4 | 4 | 4 |
| | SBR MB2 | L = 100μm, fiber content 73wt% | | 4 | | | | | | | | | |
| | SBR MB3 | L = 5μ m, fiber content 73wt% | | | | | | | | | | | |
| | SBR MB4 | L = 12mm, fiber content 73wt% | | | | | | | | | | | |
| | NR MB1 | L = 100μ m, MB1, fiber content 16.6wt% | | | 18 | | | | | | | | |
| | NR MB2 | L = 60 μ m, MB2, fiber content 16.6wt% | | | | 18 | | | | | | | |
| | NR MB3 | L = 5μm, MB3, fiber content 16.6wt% | | | | | | | | | | | |
| | Fiber content (phr) | | 2.92 | 2.92 | 2.99 | 2.99 | 1.46 | 7.3 | 2.92 | 2.92 | 2.92 | 2.92 | 2.92 |
| Carbon black | HP180 | HP180 BET 175, Ctab 181 | 115 | 115 | 115 | 115 | 115 | 115 | | | | | 70 |
| | HP160 | HP160 BET 153, Ctab 158 | | | | | | | 125 | | | | |
| | EB201 | BET 240, Ctab 204 | | | | | | | | 105 | | | |
| | N110 | Shoblack N110, BET 142, Ctab 119 | | | | | | | | | 130 | 90 | |
| Silica | U9000 | BET 230 | | | | | | | | | | 50 | 50 |
| Aluminum hydroxide | ATH#C | 0.8μ m, BET 7 | | | | | | | | | | | |
| | ATH#B | 0.6μ m, BET 15 | | | | | | | | | | | |

(continued)

| MC Tread (component that contacts road during running) | | | Example | | | | | | | | | | |
|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 |
| Plasticizer | TDAE oil | Vivatec 500, Tg -58°C | 15 | 15 | 0 | 0 | 10 | 15 | 15 | 15 | 0 | 0 | 0 |
| Resin | Koresin | softening point 145, Tg 98°C | 40 | 40 | 50 | 50 | 40 | 40 | 40 | 40 | 50 | 50 | 50 |
| | Hydrogenated aromatic modified terpene M125 | softening point 125°C | 20 | 20 | 20 | 20 | 20 | 20 | 20 | 20 | 20 | 20 | 20 |
| Zinc oxide | Zinc oxide #2 | Ginrei R | 2 | 2 | 2 | 2 | 2 | 2 | 2 | 2 | 2 | 2 | 2 |
| Silane coupling agent | NXT | product of Momentive (8% relative to silica) | | | | | | | | | | 4 | 4 |
| Antioxidant | Wax | Ozoace 0355 | 1 | 1 | 1 | 1 | 1 | 1 | 1 | 1 | 1 | 1 | 1 |
| | 6PPD | Antigene 6C | 3 | 3 | 3 | 3 | 3 | 3 | 3 | 3 | 3 | 3 | 3 |
| | TMQ | Nocrac 224 | 1 | 1 | 1 | 1 | 1 | 1 | 1 | 1 | 1 | 1 | 1 |
| Vulcanizing agent | Stearic acid | Tsubaki | 3 | 3 | 3 | 3 | 3 | 3 | 3 | 3 | 3 | 3 | 3 |
| | 5% oil-containing powdered sulfur | HK-200-5 | 1.10 | 1.10 | 1.10 | 1.10 | 1.10 | 1.10 | 1.10 | 1.10 | 1.10 | 1.10 | 1.10 |
| | TBBS | Nocceler NS-G | 3 | 3 | 3 | 3 | 3 | 3 | 3 | 3 | 3 | 3 | 3 |
| | TBZTD | Perkacit | 2 | 2 | 2 | 2 | 2 | 2 | 2 | 2 | 2 | 2 | 2 |
| | | Total amount | 347.6 | 347.6 | 335.98 | 335.98 | 340.6 | 353.6 | 357.6 | 337.6 | 357.6 | 371.6 | 351.6 |
| Fiber orientation angle | Angle to circumferential direction 90° corresponds to radial direction. | | 0 | 0 | 0 | 0 | 0 | 0 | 0 | 0 | 0 | 0 | 0 |

(continued)

| MC Tread (component that contacts road during running) | | | Example | | | | | | | | | | |
|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 |
| Actual vehicle performance | Hs adjusted to 75+/-2 | measured with Hs tester after tire production | | | | | | | | | | | |
| | Dry grip index | Target ≥ 107 | 122 | 115 | 108 | 107 | 108 | 114 | 120 | 119 | 110 | 108 | 113 |
| | Abrasion index | Target ≥ 95 | 102 | 105 | 95 | 95 | 100 | 95 | 97 | 106 | 95 | 95 | 98 |

[Table 2-2]

| MC Tread (component that contacts road during running) | | | Example | | | | | | | | |
|---|---|---|---|---|---|---|---|---|---|---|---|
| | | | 2-12 | 2-13 | 2-14 | 2-15 | 2-16 | 2-17 | 2-18 | 2-19 | 2-20 |
| NR | TSR20 | | | 30 | | | | | | | |
| SBR | Modified SBR | extender oil 37.5 parts, Styr41%,Vyn40%,Tg-29. Mw 1,190,000 | 96.25 | 96.25 | 96.25 | | 137.5 | 137.5 | 137.5 | 137.5 | 137.5 |
| | NS522 | extender oil 37.5 parts, Styr39,Vny40, Tg-34, Mw 840,000 | | | | 137.5 | | | | | |
| | NS612 | non-oil extended, Styr15, Vynl30, Tg-65, Mw 780,000 | | | 30 | | | | | | |
| BR | CB24 | high-cis Nd-catalyzed BR | 30 | | | | | | | | |
| Short aramid fiber | AFP-40 | L = 1.5mm, fiber content 40wt%, EPDM 60wt% | | | | | | | | | |
| Short cellulose fiber | Santweb DX (SBR MB1) | L = 1.5mm, fiber content 73wt% | 4 | 4 | 4 | 4 | 4 | 4 | 4 | 4 | 4 |
| | SBR MB2 | L = 100 μm, fiber content 73wt% | | | | | | | | | |
| | SBR MB3 | L = 5 μm, fiber content 73wt% | | | | | | | | | |
| | SBR MB4 | L = 12mm, fiber content 73wt% | | | | | | | | | |
| | NR MB1 | L = 100μ m, MB1, fiber content 16.6wt% | | | | | | | | | |
| | NR MB2 | L = 60 μ m, MB2, fiber content 16.6wt% | | | | | | | | | |
| | NR MB3 | L = 5 μm, MB3, fiber content 16.6wt% | | | | | | | | | |
| | Fiber content (phr) | | 2.92 | 2.92 | 2.92 | 2.92 | 2.92 | 2.92 | 2.92 | 2.92 | 2.92 |

(continued)

| MC Tread (component that contacts road during running) | | | Example | | | | | | | | |
|---|---|---|---|---|---|---|---|---|---|---|---|
| | | | 2-12 | 2-13 | 2-14 | 2-15 | 2-16 | 2-17 | 2-18 | 2-19 | 2-20 |
| Carbon black | HP180 | HP180 BET 175, Ctab 181 | 115 | 115 | 115 | 115 | 115 | 115 | 115 | 115 | 115 |
| | HP160 | HP160 BET 153, Ctab 158 | | | | | | | | | |
| | EB201 | BET 240, Ctab 204 | | | | | | | | | |
| | N110 | Shoblack N110, BET 142, Ctab 119 | | | | | | | | | |
| Silica | U9000 | BET 230 | | | | | | | | | |
| Aluminum hydroxide | ATH#C | 0.8$\mu$ m, BET 7 | | | | | | | | | 5 |
| | ATH#B | 06$\mu$ m, BET 15 | 5 | 5 | 5 | | | | | 5 | |
| Plasticizer | TDAE oil | Vivatec 500, Tg -58°C | 0 | 15 | 15 | 15 | 15 | 15 | 15 | 15 | 15 |
| Resin | Koresin | softening point 145, Tg 98°C | 50 | 50 | 40 | 40 | 40 | 40 | 40 | 40 | 40 |
| | Hydrogenated aromatic modified terpene M125 | softening point 125°C | 20 | 20 | 20 | 20 | 20 | 20 | 20 | 20 | 20 |
| Zinc oxide | Zinc oxide #2 | Ginrei R | 2 | 2 | 2 | 2 | 2 | 2 | 2 | 2 | 2 |
| Silane coupling agent | NXT | product of Momentive (8% relative to silica) | | | | | | | | | |
| Antioxidant | Wax | Ozoace 0355 | 1 | 1 | 1 | 1 | 1 | 1 | 1 | 1 | 1 |
| | 6PPD | Antigene 6C | 3 | 3 | 3 | 3 | 3 | 3 | 3 | 3 | 3 |
| | TMQ | Nocrac 224 | 1 | 1 | 1 | 1 | 1 | 1 | 1 | 1 | 1 |
| Vulcanizing agent | Stearic acid | Tsubaki | 3 | 3 | 3 | 3 | 3 | 3 | 3 | 3 | 3 |
| | 5% oil-containing powdered sulfur | HK-200-5 | 1.10 | 1.10 | 1.10 | 1.10 | 1.10 | 1.10 | 1.10 | 1.10 | 1.10 |
| | TBBS | Nocceler NS-G | 3 | 3 | 3 | 3 | 3 | 3 | 3 | 3 | 3 |
| | TBZTD | Perkacit | 2 | 2 | 2 | 2 | 2 | 2 | 2 | 2 | 2 |

(continued)

| MC Tread (component that contacts road during running) | | | Example | | | | | | | | |
|---|---|---|---|---|---|---|---|---|---|---|---|
| | | | 2-12 | 2-13 | 2-14 | 2-15 | 2-16 | 2-17 | 2-18 | 2-19 | 2-20 |
| | | Total amount | 336.35 | 351.35 | 341.35 | 347.6 | 347.6 | 347.6 | 347.6 | 352.6 | 352.6 |
| Fiber orientation angle | Angle to circumferential direction 90° corresponds to radial direction. | | 0 | 0 | 0 | 0 | 15 | 30 | 90 | 0 | 0 |
| Actual vehicle performance | Hs adjusted to 75+/-2 | measured with Hs tester after tire production | | | | | | | | | |
| | Dry grip index | Target ≥ 107 | 111 | 108 | 111 | 115 | 115 | 112 | 107 | 127 | 124 |
| | Abrasion index | Target≥95 | 110 | 97 | 106 | 95 | 102 | 102 | 100 | 97 | 95 |

[Table 2-3]

| MC Tread (component that contacts road during running) | | | Comparative Example | | | | | | | | | | | |
|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 |
| NR | TSR20 | | | 45 | | | | | 50 | | | 50 | | |
| SBR | Modified SBR | extender oil 37.5 parts, Styr41%, Vyn40%,Tg-29. Mw 1,190,000 | 137.5 | 75.63 | 137.5 | 133.9 | 137.5 | 137.5 | 68.75 | 116.88 | 68.75 | 68.75 | 137.5 | 137.5 |
| | NS522 | extender oil 37.5 parts, Styr39,Vny40, Tg-34, Mw 840,000 | | | | | | | | | | | | |
| | NS612 | non-oil extended, Styr15, Vynl30, Tg-65, Mw 780,000 | | | | | | | | | | | | |
| BR | CB24 | high-cis Nd-catalyzed BR | | | | | | | | | 50 | | | |
| Short aramid fiber | AFP-40 | L = 1.5mm, fiber content 40wt%, EPDM 60wt% | | | | | | | | | | | 7.3 | |

(continued)

| MC Tread (component that contacts road during running) | | | Comparative Example | | | | | | | | | | | |
|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 |
| Short cellulose fiber | Santweb DX (SBR MB1) | L = 1.5mm, fiber content 73wt% | | 4 | 0.1 | 29 | | | 4 | | 4 | 4 | | |
| | SBR MB2 | L = 100μm, fiber content 73wt% | | | | | | | | | | | | |
| | SBR MB3 | L = 5μm, fiber content 73wt% | | | | | 4 | | | | | | | |
| | SBR MB4 | L = 12mm, fiber content 73wt% | | | | | | 4 | | | | | | |
| | NR MB1 | L = 100μm, MB1, fiber content 16.6wt% | | | | | | | | | | | | |
| | NR MB2 | L = 60μm, MB2, fiber content 16.6wt% | | | | | | | | | | | | |
| | NR MB3 | L = 5μm. MB3, fiber content 16.6wt% | | | | | | | | 18 | | | | |
| | Fiber content (phr) | | 0 | 2.92 | 0.073 | 21.1 | 2.92 | 2.92 | 2.92 | 2.99 | 2.92 | 2.92 | 2.92 | 0 |
| Carbon black | HP180 | HP180 BET 175, Ctab 181 | 115 | 115 | 115 | 115 | 115 | 115 | 70 | 115 | 115 | 115 | 115 | 115 |
| | HP160 | HP160 BET 153, Ctab 158 | | | | | | | | | | | | |
| | EB201 | BET 240, Ctab 204 | | | | | | | | | | | | |
| | N110 | Shoblack N110, BET 142, Ctab 119 | | | | | | | | | | | | |
| Silica | U9000 | BET 230 | | | | | | | 50 | | | | | |

(continued)

| MC Tread (component that contacts road during running) | | | Comparative Example | | | | | | | | | | | |
|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 |
| Aluminum hydroxide | ATH#C | 0.8$\mu$m, BET 7 | | | | | | | | | | | | |
| | ATH#B | 0.6$\mu$ m, BET 15 | | | | | | | 5 | | 5 | 5 | | |
| Plasticizer | TDAE oil | Vivatec 500, Tg-58°C | 15 | 15 | 15 | 15 | 15 | 15 | 0 | 15 | 0 | 0 | 15 | 15 |
| Resin | Koresin | softening point Tg 98°C | 40 | 40 | 40 | 40 | 40 | 40 | 50 | 40 | 50 | 50 | 40 | 40 |
| | Hydrogenated aromatic modified terpene M125 | softening point 125°C | 20 | 20 | 20 | 20 | 20 | 20 | 20 | 20 | 20 | 20 | 20 | 20 |
| Zinc oxide | Zinc oxide #2 | Ginrei R | 2 | 2 | 2 | 2 | 2 | 2 | 2 | 2 | 2 | 2 | 2 | 2 |
| Silane coupling agent | NXT | product of Momentive (8% relative to silica) | | | | | | | 4 | | | | | |
| Antioxidant | Wax | Ozoace 0355 | 1 | 1 | 1 | 1 | 1 | 1 | 1 | 1 | 1 | 1 | 1 | 1 |
| | 6PPD | Antigene 6C | 3 | 3 | 3 | 3 | 3 | 3 | 3 | 3 | 3 | 3 | 3 | 3 |
| | TMQ | Nocrac 224 | 1 | 1 | 1 | 1 | 1 | 1 | 1 | 1 | 1 | 1 | 1 | 1 |
| Vulcanizing agent | Stearic acid | Tsubaki | 3 | 3 | 3 | 3 | 3 | 3 | 3 | 3 | 3 | 3 | 3 | 3 |
| | 5% oil-containing powdered sulfur | HK-200-5 | 1.10 | 1.10 | 1.10 | 1.10 | 1.10 | 1.10 | 1.10 | 1.10 | 1.10 | 1.10 | 1.10 | 1.10 |
| | TBBS | Nocceler NS-G | 3 | 3 | 3 | 3 | 3 | 3 | 3 | 3 | 3 | 3 | 3 | 3 |
| | TBZTD | Perkacit | 2 | 2 | 2 | 2 | 2 | 2 | 2 | 2 | 2 | 2 | 2 | 2 |
| | | Total amount | 343.6 | 330.73 | 343.7 | 369 | 347.6 | 347.6 | 337.85 | 340.98 | 328.85 | 328.85 | 350.9 | 343.6 |
| Fiber orientation angle | Angle to circumferential direction 90° corresponds to radial direction. | | 0 | 0 | 0 | 0 | 0 | 0 | 0 | 0 | 0 | 0 | 0 | 90 |

(continued)

| MC Tread (component that contacts road during running) | | | Comparative Example | | | | | | | | | | | |
|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 |
| Actual vehicle performance | Hs adjusted to 75+/-2 | measured with Hs tester after tire production | | | | | | | | | | | | |
| | Dry grip index | Target ≥ 107 | 100 | 90 | 102 | 91 | 106 | 96 | 88 | 95 | 85 | 92 | 80 | 98 |
| | Abrasion index | Target ≥ 95 | 100 | 87 | 100 | 75 | 100 | 70 | 65 | 88 | 112 | 87 | 75 | 100 |

Tables 2-1 to 2-3 demonstrate that tires for racing motorcycles including a tread which contained predetermined amounts of SBR and a short cellulose fiber having a predetermined fiber length and in which the short fiber was oriented in the circumferential direction exhibited significantly improved straight traction while maintaining or improving good abrasion resistance, thereby achieving a balanced improvement in these properties. Particularly tires including a tread prepared from a masterbatch containing SBR, the short cellulose fiber, and carbon black exhibited excellent properties.
As can be seen from comparison with Examples 2-16 to 2-18 using the same formulation as in Example 2-1 but using different orientation angles, better dry grip performance was found at a fiber orientation angle of 0°. As can be seen from comparison with Comparative Example 2-12 using the same formulation as in Comparative Example 2-1 but using a different orientation angle, better dry grip performance was found at an angle of 0° to the extrusion direction.

## Claims

1. A pneumatic tire, including a component that contacts a road during running,

   the component being formed from a rubber composition for a component that contacts a road during running, the rubber composition comprising:

   styrene-butadiene rubber;
   a short cellulose fiber having an average fiber length of 10 μm to 10 mm; and
   at least one of a silica having a nitrogen adsorption specific surface area of 100 $m^2$/g or more or a carbon black having a nitrogen adsorption specific surface area of 70 $m^2$/g or more,
   the styrene-butadiene rubber being present in an amount of 60% by mass or more based on 100% by mass of a rubber component in the rubber composition,
   the rubber composition comprising, per 100 parts by mass of the rubber component, 0.1 to 20 parts by mass of the short cellulose fiber and at least 60 parts by mass in total of the at least one of the silica or the carbon black.

2. The pneumatic tire according to claim 1,
   wherein the carbon black has a nitrogen adsorption specific surface area of 150 $m^2$/g or more.

3. The pneumatic tire according to claim 1 or 2,
   wherein the styrene-butadiene rubber has a weight average molecular weight of 1,000,000 or more.

4. The pneumatic tire according to any one of claims 1 to 3,
   wherein the rubber composition for a component that contacts a road during running is prepared from a masterbatch comprising the short cellulose fiber and the styrene-butadiene rubber.

5. The pneumatic tire according to claim 4,
   wherein the masterbatch comprises carbon black.

6. The pneumatic tire according to any one of claims 1 to 5,
   wherein the component that contacts a road during running forms at least one tread layer of a mono- or multi-layered tread.

7. The pneumatic tire according to any one of claims 1 to 6,
   wherein the component that contacts a road during running has a road-contacting area including a region in which the short cellulose fiber is oriented at 30° to 90° with respect to a circumferential direction.

8. The pneumatic tire according to any one of claims 1 to 7,
   wherein an orientation of the short cellulose fiber in the component that contacts a road during running and an orientation of the short cellulose fiber in an adjacent inner compound cross at an angle in the range of 10° to 90°.

9. A tire for motorcycles, including a component that contacts a road during running,
   the component being formed from a rubber composition for a component that contacts a road during running,
   the rubber composition comprising:

   styrene-butadiene rubber; and

a short cellulose fiber having an average fiber length of 10 μm to 10 mm,
the styrene-butadiene rubber being present in an amount of 60% by mass or more based on 100% by mass of a rubber component in the rubber composition,
the rubber composition comprising 0.1 to 20 parts by mass of the short cellulose fiber per 100 parts by mass of the rubber component.

**10.** The tire for motorcycles according to claim 9, comprising a carbon black having a nitrogen adsorption specific surface area of 150 $m^2/g$ or more.

**11.** The tire for motorcycles according to claim 9 or 10,
wherein the styrene-butadiene rubber has a weight average molecular weight of 1,000,000 or more.

**12.** The tire for motorcycles according to any one of claims 9 to 11,
wherein the rubber composition for a component that contacts a road during running is prepared from a masterbatch comprising the short cellulose fiber and the styrene-butadiene rubber.

**13.** The tire for motorcycles according to claim 12,
wherein the masterbatch comprises carbon black.

**14.** The tire for motorcycles according to any one of claims 9 to 13,
wherein the component that contacts a road during running forms at least one tread layer of a mono- or multi-layered tread.

**15.** The tire for motorcycles according to any one of claims 9 to 14,
wherein the component that contacts a road during running has a contact zone in which the short cellulose fiber is aligned at 0° to 45° to a circumferential direction.

**16.** The tire for motorcycles according to any one of claims 9 to 14,
wherein the component that contacts a road during running has a contact zone in which the short cellulose fiber is aligned at 0° to 30° to a circumferential direction.

## INTERNATIONAL SEARCH REPORT

International application No. PCT/JP2016/064760

A. CLASSIFICATION OF SUBJECT MATTER
*C08L9/06*(2006.01)i, *B60C1/00*(2006.01)i, *C08J3/22*(2006.01)i, *C08K3/04*(2006.01)i, *C08K3/36*(2006.01)i, *C08L1/02*(2006.01)i

According to International Patent Classification (IPC) or to both national classification and IPC

B. FIELDS SEARCHED

Minimum documentation searched (classification system followed by classification symbols)
C08L9/06, B60C1/00, C08J3/22, C08K3/04, C08K3/36, C08L1/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-098539 A (Sumitomo Rubber Industries, Ltd.), 28 May 2015 (28.05.2015), entire text (Family: none) | 1-16 |
| A | JP 2014-125607 A (Kao Corp.), 07 July 2014 (07.07.2014), entire text (Family: none) | 1-16 |
| A | JP 2011-137105 A (Kao Corp.), 14 July 2011 (14.07.2011), entire text (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 August 2016 (01.08.16) | 16 August 2016 (16.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/064760

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2015-168383 A (Sumitomo Rubber Industries, Ltd.), 28 September 2015 (28.09.2015), entire text (Family: none) | 1-16 |
| P,A | JP 2015-209536 A (Sumitomo Rubber Industries, Ltd.), 24 November 2015 (24.11.2015), entire text (Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014047328 A
- JP 2010111753 A
- JP H0653768 B
- JP H0657767 B
- JP 2003514078 T